(19)

Europäisches
Patentamt
European
Patent Office
Office européen
des brevets

(11)     EP 4 024 862 A1

(12)     **EUROPEAN PATENT APPLICATION**
published in accordance with Art. 153(4) EPC

(43) Date of publication:
**06.07.2022 Bulletin 2022/27**

(21) Application number: **20921120.0**

(22) Date of filing: **05.11.2020**

(51) International Patent Classification (IPC):
***H04N 19/154*** *(2014.01)*

(86) International application number:
**PCT/CN2020/126740**

(87) International publication number:
**WO 2021/169392 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.02.2020 CN 202010112208**

(71) Applicant: **TENCENT TECHNOLOGY (SHENZHEN)
COMPANY LIMITED
Shenzhen, GUANGDONG 518057, (CN)**

(72) Inventors:
• **XU, Shishen
Shenzhen, Guangdong 518057 (CN)**

• **WU, Jingran
Shenzhen, Guangdong 518057 (CN)**
• **ZHAO, Jun
Shenzhen, Guangdong 518057 (CN)**
• **MA, Juncheng
Shenzhen, Guangdong 518057 (CN)**
• **LI, Yaqing
Shenzhen, Guangdong 518057 (CN)**
• **TU, Chengjie
Shenzhen, Guangdong 518057 (CN)**
• **WANG, Liang
Shenzhen, Guangdong 518057 (CN)**

(74) Representative: **Eisenführ Speiser
Patentanwälte Rechtsanwälte PartGmbB
Postfach 10 60 78
28060 Bremen (DE)**

(54)     **VIDEO DATA PROCESSING METHOD AND APPARATUS, DEVICE, AND READABLE STORAGE MEDIUM**

(57)     Embodiments of the present application provide a video data processing method and apparatus, a device, and a readable storage medium. The method comprises: obtaining video features of a target video, the video features comprising background features and key part region features; obtaining key part expected quality corresponding to the target video; determining a background prediction transcoding parameter of the target video on the basis of the background features; according to the background features, the key part region features, and the background prediction transcoding parameter, determining a target transcoding parameter prediction value satisfying background expected quality and matched with the key part expected quality; and transcoding the target video according to the background prediction transcoding parameter and the target transcoding parameter prediction value.

```
┌─────────────────────────────────────────┐
│ Acquire video features of a target video, │  S101
│ the video features including background   │
│ features and key part region features     │
└─────────────────────────────────────────┘
                    │
                    ▼
┌─────────────────────────────────────────┐
│ Acquire an expected quality of a key part │  S102
│ corresponding to the target video         │
└─────────────────────────────────────────┘
                    │
                    ▼
┌─────────────────────────────────────────┐
│ Determine a background prediction         │  S103
│ transcoding parameter of the target video │
│ based on the background features          │
└─────────────────────────────────────────┘
                    │
                    ▼
┌─────────────────────────────────────────┐
│ Determine a target transcoding parameter  │  S104
│ prediction value satisfying an expected   │
│ quality of a background and matched with  │
│ the expected quality of the key part      │
│ according to the background features, the │
│ key part region features and the          │
│ background prediction transcoding         │
│ parameter                                 │
└─────────────────────────────────────────┘
                    │
                    ▼
┌─────────────────────────────────────────┐
│ Transcode the target video according to   │  S105
│ the target transcoding parameter          │
│ prediction value                          │
└─────────────────────────────────────────┘
```

FIG. 3

EP 4 024 862 A1

**Description**

This application claims priority to Chinese Patent Application No. 202010112208.8, entitled "VIDEO DATA PROCESSING METHOD AND APPARATUS, DEVICE, AND READABLE STORAGE MEDIUM" filed with the China National Intellectual Property Administration on February 24, 2020, which is incorporated by reference in its entirety.

FIELD

This application relates to the field of computer technologies, and in particular, to a video data processing method and apparatus, a device, and a readable storage medium.

BACKGROUND

With the development of broadcasting technologies and network video applications, videos have become an important part in people's daily life. For example, people may use the videos for learning or entertainment. To adapt to different network bandwidths, different terminal processing capabilities, and different user requirements, video transcoding is required.
The video transcoding mainly performed to process overall content of a video. Based on the overall content of the video, video feature are extracted, a bit rate of the video under a target quality is predicted based on the video feature, and the video is transcoded based on the predicted bit rate.

SUMMARY

A video data processing method and apparatus, a device, and a readable storage medium are provided according to embodiments of this application, to improve the quality of the key part region in a video after being transcoded.
In one aspect of the embodiments of this application, a video data processing method is provided, which includes:

acquiring a video feature of a target video, the video feature including a background feature and a key part region feature;

acquiring an expected key part quality corresponding to the target video, the expected key part quality being an expected value of an image quality of a key part in a transcoded target video obtained by transcoding the target video;

determining a background prediction transcoding parameter of the target video based on the background feature, the background prediction transcoding parameter matching with an expected background quality, and the expected background quality being an expected value of an overall image quality of the transcoded target video obtained by transcoding the target video;

determining, based on the background feature, the key part region feature and the background prediction transcoding parameter, a target transcoding parameter prediction value meeting the expected background quality and matching with the expected key part quality; and

transcoding the target video based on the target transcoding parameter prediction value.

In one aspect of the embodiments of this application, a video data processing apparatus is provided, which includes: a feature acquisition module, a quality acquisition module, a transcoding parameter determining module, a prediction value determining module and a video transcoding module. The feature acquisition module is configured to acquire a video feature of a target video, the video feature includes a background feature and a key part region feature. The quality acquisition module is configured to acquire an expected key part quality corresponding to the target video, the expected key part quality is an expected value of an image quality of the key part in a transcoded target video obtained by transcoding the target video. The transcoding parameter determining module is configured to determine a background prediction transcoding parameter of the target video based on the background feature, the background prediction transcoding parameter matches with an expected background quality, and the expected background quality is an expected value of an overall image quality of the transcoded target video obtained by transcoding the target video. The prediction value determining module is configured to determine, based on the background feature, the key part region feature and the background prediction transcoding parameter, a target transcoding parameter prediction value meeting the expected background quality and matching with the expected key part quality. The video transcoding module is configured to transcode the target video based on the target transcoding parameter prediction value.

The feature acquisition module includes: a target video acquisition unit, a key part region acquisition unit and a video pre-encoding unit. The target video acquisition unit is configured to acquire the target video. The key part region acquisition unit is configured to acquire a key part region in the target video. The video pre-encoding unit is configured to pre-encode the target video based on a feature encoding parameter and the key part region to obtain the background feature and the key part region feature corresponding to the target video.

The background feature includes one or more of the following: a resolution, a bit rate, a frame rate, a reference frame, a peak signal to noise ratio (PSNR), a structural similarity index (SSIM), and video multi-method assessment fusion (VMAF). The key part region feature includes one or more of the following: a PSNR of the key part region, an SSIM of the key part region, VMAF of the key part region, a key part frame number ratio of the number of key video frames in which the key part exists to the total number of video frames, a key part area ratio of the area of the key part region in a key video frame in which the key part exists to the total area of the key video frame, and an average bit rate of the key part region.

The video pre-encoding unit includes: an encoding parameter acquisition subunit, a key video frame determining subunit and a key part region feature determining subunit. The encoding parameter acquisition subunit is configured to acquire the feature encoding parameter, and pre-encode the target video based on the feature encoding parameter to obtain the background feature of the target video. The key video frame determining subunit is configured to determine, in video frames of the target video, a video frame including the key part region as a key video frame. The key part region feature determining subunit is configured to pre-encode the key video frames and the key part region based on the feature encoding parameter to obtain the key part region feature of the target video.

The key part region feature determining subunit is further configured to pre-encode the key video frames based on the feature encoding parameter to obtain a basic attribute of the key video frames. The key part region feature determining subunit is further configured to acquire the total number of the video frames of the target video, and the total number of the key video frames, and determine a key part frame number ratio of the total number of the video frames of the target video to the total number of the key video frames. The key part region feature determining subunit is further configured to acquire the area of the key part region in the key video frame, and the total area of the key video frame, and determine a key part area ratio of the area of the key part region to the total area of the key video frame. The key part region feature determining subunit is further configured to determine the basic attribute of the key video frames, the key part frame number ratio and the key part area ratio as the key part region feature.

The target video acquisition unit includes: an initial video acquisition subunit, a switch frame determining subunit, and a video segmentation subunit. The initial video acquisition subunit is configured to acquire an initial video. The switch frame determining subunit is configured to input the initial video into a segmentation encoder, and determine a scene switch frame of the initial video in the segmentation encoder. The video segmentation subunit is configured to segment, based on the scene switch frame, the initial video into video segments corresponding to at least two different scenes, and acquire a target video segment from the video segments as the target video.

The prediction value determining module includes: an initial transcoding parameter prediction value output unit, and a target transcoding parameter prediction value determining unit. The initial transcoding parameter prediction value output unit is configured to input the background feature, the key part region feature and the background prediction transcoding parameter into a transcoding parameter prediction model, and output at least two initial transcoding parameter prediction values through the transcoding parameter prediction model, key part quality standard values respectively corresponding to the at least two initial transcoding parameter prediction values are different from each other. The target transcoding parameter prediction value determining unit is configured to acquire the expected key part quality, and determine the target transcoding parameter prediction value corresponding to the expected key part quality based on a mapping relationship between the at least two initial transcoding parameter prediction values and the key part quality standard values.

The initial transcoding parameter prediction value output unit includes: a fusion feature generation subunit, a standard value acquisition subunit, and an initial transcoding parameter prediction value determining subunit. The fusion feature generation subunit is configured to input the background feature, the key part region feature and the background prediction transcoding parameter into a fully connected layer of the transcoding parameter prediction model, to generate a fusion feature in the fully connected layer. The standard value acquisition subunit is configured to acquire a key part quality standard value set, the key part quality standard value set includes at least two key part quality standard values. The initial transcoding parameter prediction value determining subunit is configured to determine, based on the fusion feature, an initial transcoding parameter prediction value corresponding to each of the at least two key part quality standard values.

The target transcoding parameter prediction value determining unit includes: a quality matching subunit, a target transcoding parameter prediction value determining subunit. The quality matching subunit is configured to compare the expected key part quality with the key part quality standard value set. The target transcoding parameter prediction value determining subunit is configured to determine, in a case that the key part quality standard value set comprises a key part quality standard value that is identical to the expected key part quality, an initial transcoding parameter prediction value corresponding to the key part quality standard value that is identical to the expected key part quality in the at least two initial transcoding parameter prediction values based on the mapping relationship between the at least two initial transcoding parameter prediction values and the key part quality standard values, as the target transcoding parameter prediction value. The target transcoding parameter prediction value determining subunit is further configured to determine, in a case that the key part quality standard value set comprises no key part quality standard value that is identical to the expected key part quality, a linear function based on the mapping relationship between the at least two initial transcoding parameter prediction values and the key part quality standard values, and determine the target transcoding parameter prediction value based on the linear function and the expected key part quality.

The target transcoding parameter prediction value determining subunit is further configured to acquire key part quality standard values greater than the expected key part quality in the key part quality standard value set, and determine a minimum key part quality standard value in the key part quality standard values greater than the expected key part quality. The target transcoding parameter prediction value determining subunit is further configured to acquire key part quality standard values less than the expected key part quality in the key part quality standard value set, and determine a maximum key part quality standard value in the key part quality standard values less than the expected key part quality. The target transcoding parameter prediction value determining subunit is further configured to determine, based on the mapping relationship between the at least two initial transcoding parameter prediction values and the key part quality standard values, an initial transcoding parameter prediction value corresponding to the maximum key part quality standard value, and an initial transcoding parameter prediction value corresponding to the minimum key part quality standard value. The target transcoding parameter prediction value determining subunit is further configured to determine the linear function based on the maximum key part quality standard value, the initial transcoding parameter prediction value corresponding to the maximum key part quality standard value, the minimum key part quality standard value, and the initial transcoding parameter prediction value corresponding to the minimum key part quality standard value.

The apparatus further includes: a prediction model acquisition module, a sample acquisition module, a sample prediction value output module, a transcoding parameter label acquisition module, a transcoding parameter prediction error determining module, a training completion module, and a parameter adjustment module. The prediction model acquisition module is configured to acquire a transcoding parameter prediction model to be trained. The sample acquisition module is configured to acquire a sample video feature of a sample video and a key part quality standard value set, the key part quality standard value set including at least two key part quality standard values. The sample prediction value output module is configured to input the sample video feature into the transcoding parameter prediction model, and output a sample initial transcoding parameter prediction value corresponding to each of the at least two key part quality standard values through the transcoding parameter prediction model. The transcoding parameter label acquisition module is configured to acquire a key part standard transcoding parameter label corresponding to each of the at least two key part quality standard values from a label mapping table. The transcoding parameter prediction error determining module is configured to determine a transcoding parameter prediction error based on the sample initial transcoding parameter prediction value and the key part standard transcoding parameter label. The training completion module is configured to complete training of the transcoding parameter prediction model in a case that the transcoding parameter prediction error meets a model convergence condition. The parameter adjustment module is configured to adjust a model parameter in the transcoding parameter prediction model in a case that the transcoding parameter prediction error does not meet the model convergence condition.

The apparatus further includes: a test transcoding parameter acquisition module, a test quality determining module and a mapping table construction module. The test transcoding parameter acquisition module is configured to acquire multiple background test transcoding parameters and multiple key part test transcoding parameters. The test quality determining module is configured to input the sample video feature into a label encoder, and encode, in the label encoder, the sample video feature based on the multiple background test transcoding parameters and the multiple key part test transcoding parameters, to obtain a key part test quality corresponding to each of the key part test transcoding parameters under each of the background test transcoding parameters. The mapping table construction module is configured to construct the label mapping table based on a mapping relationship between the key part test quality and each of the key part test transcoding parameters.

The mapping table construction module is further configured to determine, in a case that key part test quality in the constructed label mapping table includes the at least two key part quality standard values, a key part test transcoding parameter corresponding to each of the key part quality standard values in the label mapping table, and use the key part test transcoding parameter as the key part standard transcoding parameter label; and determine, in a case that the key part test quality in the constructed label mapping table does not include the at least two key part quality standard values, a key part transcoding parameter corresponding to each of the key part quality standard values based on the key part test quality and the key part test transcoding parameter in the constructed label mapping table, and use the key part transcoding parameter as the key part standard transcoding parameter label.

In one aspect of the embodiments of this application, a computer device is provided, which includes: a processor and a memory. The memory is configured to store a computer program, the computer program, when executed by the processor, causing the processor to perform the method in the embodiments of this application.

In one aspect of the embodiments of this application, a computer-readable storage medium is provided, which stores a computer program, the computer program including program instructions, the program instructions, when executed by a processor, causing the processor to perform the method in the embodiments of this application.

## BRIEF DESCRIPTION OF THE DRAWINGS

To describe the technical solutions in the embodiments of this application or in the conventional art more clearly, drawings for describing the embodiments or the conventional art are described briefly in the following. Apparently, the drawings in the following description show merely some embodiments of this application, and a person of ordinary skill in the art may still derive other drawings from these accompanying drawings without creative efforts.

FIG. 1 is a schematic structural diagram of a network architecture according to an embodiment of this application.

FIG. 2 is a schematic diagram of a scenario of determining a target transcoding parameter prediction value according to an embodiment of this application.

FIG. 3 is a schematic flowchart of a video data processing method according to an embodiment of this application.

FIG. 4 is a schematic diagram of a process of outputting an initial transcoding parameter prediction value through a transcoding parameter prediction model according to an embodiment of this application.

FIG. 5 is a schematic flowchart of a process of acquiring a video feature of a target video according to an embodiment of this application.

FIG. 6 is a schematic flowchart of a process of training a transcoding parameter prediction model according to an embodiment of this application.

FIG. 7a is a schematic diagram of a process of obtaining a background image quality corresponding to each of background test transcoding parameters according to an embodiment of this application.

FIG. 7b is a schematic diagram of a process of constructing a label mapping table according to an embodiment of this application.

FIG. 8 is a schematic diagram of a scenario of training a transcoding parameter prediction model according to an embodiment of this application.

FIG. 9 is a diagram of a system architecture according to an embodiment of this application.

FIG. 10 is a schematic diagram of a scenario of transcoding a video based on a background prediction transcoding parameter and a target transcoding parameter prediction value according to an embodiment of this application.

FIG. 11 is a schematic structural diagram of a video data processing apparatus according to an embodiment of this application.

FIG. 12 is a schematic structural diagram of a computer device according to an embodiment of this application.

## DESCRIPTION OF EMBODIMENTS

The technical solutions in embodiments of this application are clearly and completely described below with reference to the drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

Generally, video transcoding is performed to process overall content of a video. Based on the overall content of the video, video features are extracted, a bit rate of the video under a target quality is predicted based on the video features, and the video is transcoded based on the predicted bit rate. Although such a method can be performed to control the quality of the whole frame image of the video, it is difficult to control the quality of some regions in the video (for example, a face region). Therefore, the quality of some regions in the video after transcoding is probably not high.

In the embodiments of this application, by acquiring a background feature, a key part region feature, a background prediction transcoding parameter, and an expected key part quality of a target video, a target transcoding parameter prediction value meeting an expected background quality and matching with the expected key part quality can be obtained based on the background feature, the key part region feature, and the background prediction transcoding parameter of the target video. Because region-level features of the key part are used to process the details in the key part region in the target video, a predicted target transcoding parameter prediction value can be more adapted to the key part region. Therefore, by transcoding the target video based on the target transcoding parameter prediction value, the quality of the key part region of the transcoded target video can meet the expected key part quality. That is, the quality of the key part region after the video transcoding can be improved.

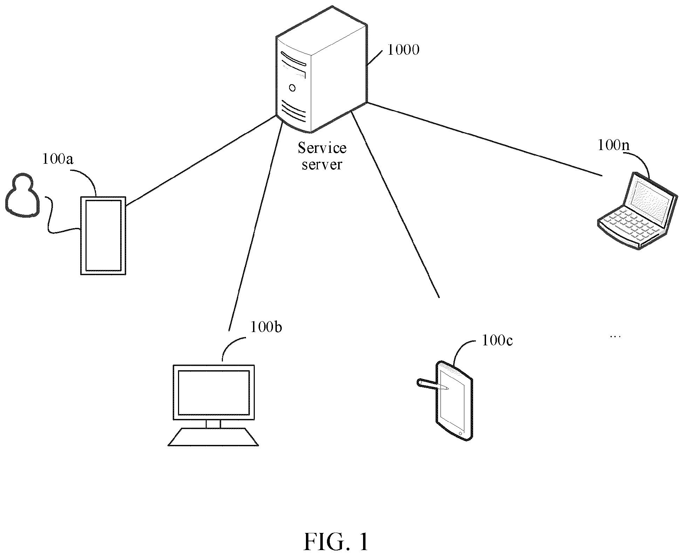

Referring to FIG. 1, FIG. 1 is a schematic structural diagram of a network architecture according to an embodiment of this application. As shown in FIG. 1, the network architecture may include a service server 1000 and a user terminal cluster. The user terminal cluster may include multiple user terminals, as shown in FIG. 1, and specifically, the user terminal may include a user terminal 100a, a user terminal 100b, a user terminal 100c, ..., and a user terminal 100n. Each user terminal corresponds to a backend server, and each backend server may be connected to the service server 1000 via a network, so that the each user terminal can perform data exchange with the service server 1000 through the backend server, and the service server 1000 can receive service data from the each user terminal.

As shown in FIG. 1, each user terminal may be integrated with a target application. When the target application runs in each user terminal, the backend server corresponding to each user terminal may store service data in the application, and perform data exchange with the service server 1000 shown in FIG. 1. The target application may include an application with a function of displaying data information such as a text, an image, an audio, and a video. The target application may be a service processing application in fields such as automation, and may be used for automatically processing data inputted by a user. For example, the target application may be a video playback application in an entertainment application.

In this embodiment of this application, one user terminal may be selected as a target user terminal from the multiple user terminals. The target user terminal may include a smart terminal with functions of displaying and playing data information, such as a smartphone, a tablet computer, a desktop computer. For example, in this embodiment of this application, the user terminal 100a shown in FIG. 1 may be used as the target user terminal, and the target user terminal may be integrated with the foregoing target application. In this case, a backend server corresponding to the target user terminal may perform data exchange with the service server 1000. For example, taking the user terminal 100a as an example, if a user A intends to transcode a target video, and requires that the quality of a key part after transcoding (that is, the expected key part quality) is 90, the user A may upload the target video in the target application of the user terminal 100a, and the backend server of the user terminal 100a may send the target video and the expected key part quality to the service server 1000. The service server 1000 may obtain a video feature (including a background feature and a key part region feature) of the target video. Based on the background feature of the target video, the service server 1000 may predict the background prediction transcoding parameter of the target video. The background prediction transcoding parameter matches with the expected background quality. Based on the background feature, the key part region feature, and the background prediction transcoding parameter, the service server 1000 may determine a target transcoding parameter prediction value matching with the expected key part quality, transcode the target video based on the target transcoding parameter prediction value, and return the transcoded target video to the backend server of the user terminal 100a, so that the user terminal 100a may display the transcoded target video, and the user A may watch the transcoded target video.

In some embodiments, the service server 1000 may further collect a large number of videos in the backend server, obtain video features of the videos, determine a transcoding parameter prediction value corresponding to each video based on the video features, transcode the video based on the transcoding parameter prediction value, and put the transcoded video into a video stream. In this way, the transcoded video may be played for the user when the user subsequently binge-watches the video by using the user terminal.

In some embodiments, it is to be understood that, the backend server may further acquire the video feature of the target video and the expected key part quality, and predict the target transcoding parameter prediction value matching with the expected key part quality based on the video feature. For a specific implementation of the backend server predicting the target transcoding parameter prediction value, reference may be made to the foregoing description of the service server 1000 predicting the target transcoding parameter prediction value. Details are not repeated herein again.

It is to be understood that, the methods provided in the embodiments of this application may be performed by a computer device, and the computer device includes but is not limited to a terminal or a server.

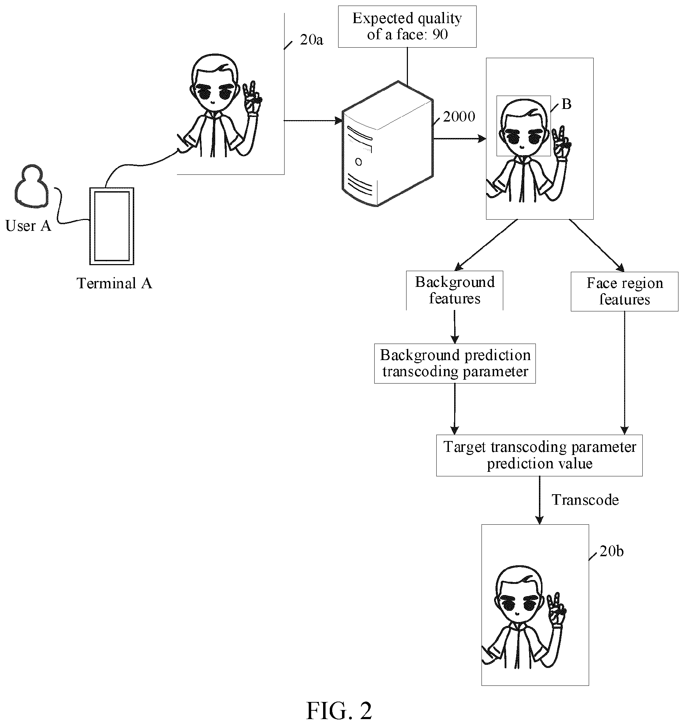

Further, for ease of understanding, refer to FIG. 2, which is a schematic diagram of a scenario of determining a target transcoding parameter prediction value according to an embodiment of this application. As shown in FIG. 2, a user A may upload a video 20a through a target application of a terminal A, and input an expected key part quality of 90, where the key part herein may refer to a human face. A backend server of the terminal A may send the video 20a and the expected key part quality of 90 of the video 20a (for example, an expected face quality) to a service server 2000. The service server 2000 may input the video 20a into a feature encoder, and determine a key part region (for example, a face region) of the video 20a as a region B in the feature encoder. The service server 2000 may pre-encode the video 20a in the feature encoder based on an obtained feature encoding parameter, to obtain a background feature of the video 20a. The video is a continuous image sequence, including continuous video frames, and a video frame is an image. The "pre-encoding" herein may mean that image attribute information (for example, a resolution, a frame rate, a bit rate, an image quality, and the like) of the video frames in the video 20a is obtained in the feature encoder. The service server 2000 may obtain the video frame of the video 20a, determine a video frame including a key part as a key video frame in the video frames, and pre-encode the key video frame and the key part region in the feature encoder based on the feature encoding parameter, to obtain a key part region feature (for example, a face region feature) of the video 20a. The service server 2000 may obtain a background prediction transcoding parameter based on the background feature. Based on the background prediction transcoding parameter, the background feature and the key part region feature, the service server 2000 may determine a target transcoding parameter prediction value matching with the expected key part quality of 90. Subsequently, when the service server 2000 transcodes the video 20a, a transcoding parameter in configuration options may be set as the target transcoding parameter prediction value. Therefore, a transcoded video 20b is obtained, and the quality of the key part region of the video 20b meets the expected key part quality.

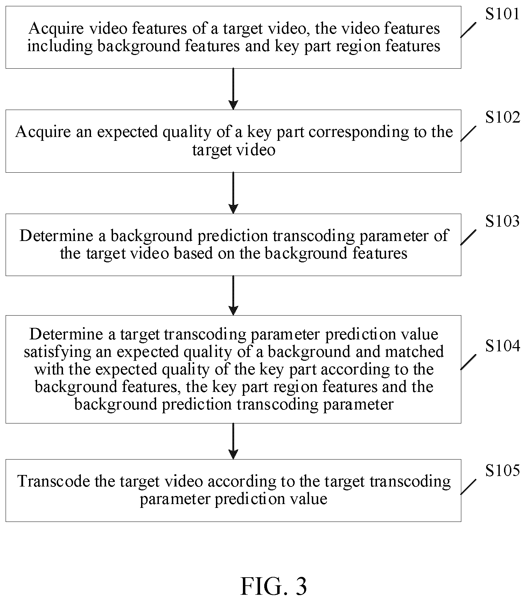

Further, referring to FIG.3, FIG. 3 is a schematic flowchart of a video data processing method according to an embodiment of this application. As shown in FIG. 3, the method may include the following steps S101 to S105.

In step S101, a video feature of a target video is acquired, the video feature includes a background feature and a key part region feature.

In this embodiment of this application, the video feature may include a background feature and a key part region feature. The key part may refer to a component part belonging to an object, and the key part region may refer to a region including the key part. The object may refer to an animal (for example, a human, a cat, a dog, or the like), a plant (for example, a tree, a flower, or the like), a building (for example, a shopping mall, a residential building, or the like), or the like. When the object is an animal, the key part may be a face, a hand, a leg, or another part. When the object is a plant, for example, the object is a tree, the key part may be a leaf, a branch or another part. That is, the key part may be of different types due to the diversity of the object. The video feature may be obtained by pre-encoding the target video based on a fixed feature encoding parameter by a feature encoder. The background feature may be obtained by pre-encoding the target video based on the feature encoding parameter. The key part region feature may be obtained by pre-encoding the key part region in the target video based on the feature encoding parameter. That is, the background feature is obtained from the overall content of the video including the key part region. The key part region feature is obtained from the key part region in the target video. The background feature are rougher than the key part region feature, but may represent the overall content of the video. The key part region feature may only represent the key part region, and is more specific than the background feature. That is, the key part region feature may include more detailed features in the key part region.

In this application, the background feature may be a frame-level image feature, such as a resolution, a bit rate, a frame rate, a reference frame, a peak signal to noise ratio (PSNR), a structural similarity index (SSIM), video multi-method assessment fusion (VMAF). The key part region feature may be a PSNR of the key part region, an SSIM of the key part region, a VMAF of the key part region, a key part frame number ratio of the number of key video frames in which the key part exists to the total number of video frames, a key part area ratio of the area of the key part region in a key video frame in which the key part exists to the total area of the key video frame, an average bit rate of the key part region, or the like.

It is to be understood that, when the target video is inputted into the feature encoder, the feature encoder may pre-encode each video frame of the target video, to determine the resolution, bit rate, frame rate and reference frame of the target video, obtain a PSNR, SSIM, and VMAF of the video frame, determine average values respectively corresponding to the PSNR, SSIM and VMAF based on the number of the video frames, and take the resolution, bit rate, frame rate, reference frame, and average values of PSNR, SSIM and VMAF as the background feature of the target video. For example, the VMAF is adopted, and the target video includes three video frames, that is, a video frame A, a video frame B and a video frame C. After the feature encoder pre-encodes the three video frames, a VMAF of 80 of the video frame A, a VMAF of 80 of the video frame B, and a VMAF of 90 of the video frame C are obtained. Then, based on the total number of 3 of the video frame A, video frame B and video frame C, a final value of the VMAF of the target video is obtained as (80+80+90)/3=83.3. In the feature encoder, a video frame in which a key part exists may be determined as a key video frame, a key part region is determined in the key video frame, the key video frame and the key part region are pre-encoded, and three feature values of a PSNR, SSIM and VMAF of the key part region in each key video frame are obtained. Then, based on the number of key video frames, an average value for each feature value is determined as the key part region feature of the target video. In addition, based on the number of key part video frames and the total number of video frames of the target video, a key part frame number ratio may be obtained, and the key part frame number ratio may be used as the key part region feature of the target video. Based on the area of the key part region in each key video frame and the total area of the key video frame, a key part area ratio of a key video frame may be obtained. Then, based on the total number of the key video frames, a final value of the key part area ratio may be obtained, and the final value of the key part area ratio may be used as the key part region feature of the target video. For example, the target video includes three video frames, that is, a video frame A, a video frame B and a video frame C. The video frame A and the video frame B are key video frames (that is, a key part exists in both the video frame A and the video frame B). Then, based on the number of 2 of the key video frame A and the key video frame B and the total number of 3 of the video frames of the target video, a key part frame number ratio may be obtained as 2/3=66.7%. The area of the key part region in the key video frame A is 3, and the total area of the key video frame A is 9, so the key part area ratio of the key video frame A is 33.3%. The area of the key part region in the key video frame B is 2, and the total area of the key video frame B is 8, so the key part area ratio of the key video frame B is 25%. Based on the total number of 2 of key video frames (one key video frame A and one key video frame B), a final value of the key part area ratio may be obtained as (33.3%+25%)/2=29.2%, and the key part frame number ratio of 66.7% and the key part area ratio of 29.2% may also be used as the key part region feature of the target video.

In step S102, an expected key part quality corresponding to the target video is acquired.

In this embodiment of this application, the expected key part quality may refer to an expected value of an image quality of a key part in a transcoded target video obtained by transcoding the target video. The expected key part quality may be an artificially specified value, or may be a value randomly generated by a server based on the range of the quality manually inputted.

In step S 103, a background prediction transcoding parameter of the target video is determined based on the background feature.

In this embodiment of this application, a transcoding parameter may refer to a configuration option parameter used when transcoding the target video. That is, the transcoding parameter may be used for transcoding the target video, and the transcoding parameter may include but is not limited to a bit rate, a frame rate, a reference frame, or the like. The background prediction transcoding parameter corresponds to an expected background quality. Based on the background feature, a background prediction transcoding parameter matching with the expected background quality may be obtained. That is, the background prediction transcoding parameter is a parameter applicable to the overall content of the target video. By transcoding the target video based on the background prediction transcoding parameter, the overall quality of the transcoded target video reaches the expected background quality. The expected background quality may refer to an expected value of the overall image quality of the transcoded target video obtained by transcoding the target video. The expected background quality may be an artificially specified value, or may be a value randomly generated by a server based on the range of the quality manually inputted.

In step S 104, a target transcoding parameter prediction value matching with the expected key part quality is determined based on the background feature, the key part region feature and the background prediction transcoding parameter.

In this embodiment of this application, the target transcoding parameter prediction value corresponds to the expected key part quality. By inputting the background prediction transcoding parameter, the background feature, and the key part region feature into a transcoding parameter prediction model together, a fusion feature may be generated through a fully connected layer of the transcoding parameter prediction model. The background feature, the key part region feature and the background prediction transcoding parameter may include M features in total. The fusion feature herein may mean that the background feature, the key part region feature and the background prediction transcoding parameter are all used as input values to be simultaneously inputted into the transcoding parameter prediction model, that is, the M features are inputted into the transcoding parameter prediction model. Through the fully connected layer of the transcoding parameter prediction model, the M features may be fused to output N initial transcoding parameter prediction values. M and N are both integers greater than 0, and a value of N depends on the number of key part quality standard values in a key part quality standard value set, that is, the value of N is identical to the number of key part quality standard values. The key part quality standard value set herein is the range of the quality inputted into the transcoding parameter prediction model before inputting the video feature into the transcoding parameter prediction model, which may be used for the transcoding parameter prediction model to determine the number of outputted initial transcoding parameter prediction values based on the number of key part quality standard values in the key part quality standard value set, and determine an initial transcoding parameter prediction value to be outputted based on the key part quality standard values.

Subsequently, the key part quality standard value set is acquired. The key part quality standard value set includes at least two key part quality standard values, and the key part quality standard value may refer to a prediction value of the image quality of the key part region in the transcoded target video obtained by transcoding the target video. The key part quality standard value may be artificially specified values, or may be at least two values randomly generated by a server based on an artificially given range. For example, if the artificially given range is between 80 and 100, the server may randomly select at least two values from the values between 80 and 100. For example, if the selected values are 85, 88, 92 and 96, the four values (such as 85, 88, 92, and 96) may all be used as the key part quality standard values, and {85, 88, 92, 96} is used as the key part quality standard value set. Based on the number of key part quality standard values in the key part quality standard value set and the foregoing fusion feature, an initial transcoding parameter prediction value corresponding to each key part quality standard value may be determined.

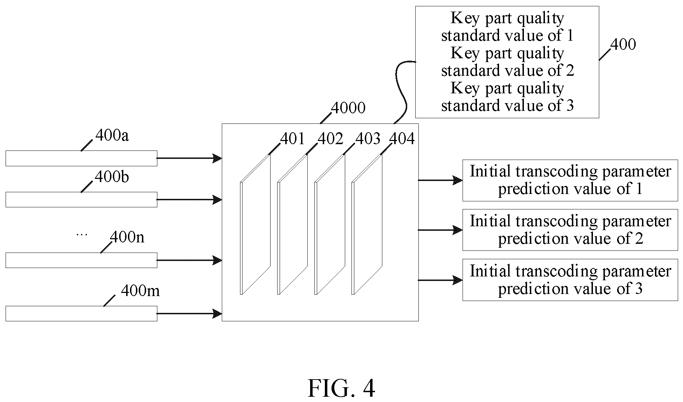

For ease of understanding, reference is made to FIG. 4, which is a schematic diagram of a process of outputting an initial transcoding parameter prediction value through a transcoding parameter prediction model according to an embodiment of this application. As shown in FIG. 4, the background feature and the key part region feature may be a feature 400a, a feature 400b, ..., and a feature 400n. A total of M input values of the feature 400a, the feature 400b, ..., and the feature 400n, and a background prediction transcoding parameter 400m are inputted into a transcoding parameter prediction model 4000. The transcoding parameter prediction model includes an input layer 401, a fully connected layer 402, a fully connected layer 403 and an output layer 404. A key part quality standard value set 400 is inputted into the transcoding parameter prediction model 4000. Through the fully connected layer 402 and the fully connected layer 403 in the transcoding parameter prediction model 4000, convolution calculation may be performed on the feature 400a, the feature 400b, ..., and the feature 400n and the background prediction transcoding parameter 400m. That is, the feature 400a, the feature 400b, ..., and the feature 400n and the background prediction transcoding parameter 400m are fused, to generate the initial transcoding parameter prediction value corresponding to each key part quality standard value in the key part quality standard value set 400. Through the output layer 404 of the transcoding parameter prediction model, an initial transcoding parameter prediction value of 1, an initial transcoding parameter prediction value of 2, and an initial transcoding parameter prediction value of 3 may be outputted. The initial transcoding parameter prediction value of 1 corresponds to a key part quality standard value of 1, the initial transcoding parameter prediction value of 2 corresponds to a key part quality standard value of 2, and the initial transcoding parameter prediction value of 3 corresponds to a key part quality standard value of 3. It can be seen that, because each initial transcoding parameter prediction value outputted by the transcoding parameter prediction model 4000 corresponds to a key part quality standard value, the number of the initial transcoding parameter prediction values outputted by the transcoding parameter prediction model 4000 after performing feature fusion depends on the number of key part quality standard values in the key part quality standard value set.

It is to be noted that, a background prediction transcoding parameter corresponds to the overall video quality (the frame-level image quality). The purpose of inputting the background prediction transcoding parameter into the transcoding parameter prediction model together with the background feature and the key part region feature is to obtain, on the premise of the background prediction transcoding parameter, a key part prediction transcoding parameter required for achieving the expected key part quality in the key part region on the basis that the overall video quality is used as the quality corresponding to the background prediction transcoding parameter.

Subsequently, the expected key part quality is acquired, and the expected key part quality is compared with the key part quality standard value set. In a case that the key part quality standard value set includes a key part quality standard value that is the same as the expected key part quality, based on the mapping relationship between the initial transcoding parameter prediction values and the key part quality standard values (that is, a one-to-one correspondence between the initial transcoding parameter prediction values and the key part quality standard values), an initial transcoding parameter prediction value corresponding to the key part quality standard value that is the same as the expected key part quality may be determined in the initial transcoding parameter prediction values as the target transcoding parameter prediction value.

For example, the initial transcoding parameter prediction values of 20, 30, and 40 are outputted by the transcoding parameter prediction model. The initial transcoding parameter prediction value of 20 corresponds to a key part quality standard value of 86, the initial transcoding parameter prediction value of 30 corresponds to a key part quality standard value of 89, and the initial transcoding parameter prediction value of 40 corresponds to a key part quality standard value of 92. An expected key part quality of 89 is obtained, and a comparing result obtained by comparing the expected key part quality of 89 with the key part quality standard value set of {86, 89, 92} is that the key part quality standard value of 89 is the same as the expected key part quality of 89. Because an initial transcoding parameter prediction value of 30 corresponds to the key part quality standard value of 89, the initial transcoding parameter prediction value of 30 is taken as the target transcoding parameter prediction value.

In a case that the key part quality standard value set includes no key part quality standard value that is the same as the expected key part quality, a linear function may be determined based on the mapping relationship between the initial transcoding parameter prediction values and the key part quality standard values, and the target transcoding parameter prediction value is determined based on the linear function and the expected key part quality. A specific implementation of determining the linear function based on the mapping relationship between the initial transcoding parameter prediction values and the key part quality standard values may be as follows: acquiring key part quality standard values greater than the expected key part quality in the key part quality standard value set, and determining a minimum key part quality standard value in the key part quality standard values greater than the expected key part quality; and acquiring key part quality standard values less than the expected key part quality in the key part quality standard value set, and determining a maximum key part quality standard value in the key part quality standard values less than the expected key part quality. That is, the minimum key part quality standard value and the maximum key part quality standard value are two values which are closest to the expected key part quality in the key part quality standard value set. Based on the mapping relationship between the initial transcoding parameter prediction values and the key part quality standard values, an initial transcoding parameter prediction value corresponding to the maximum key part quality standard value, and an initial transcoding parameter prediction value corresponding to the minimum key part quality standard value are determined. Based on the maximum key part quality standard value, the initial transcoding parameter prediction value corresponding to the maximum key part quality standard value, the minimum key part quality standard value, and the initial transcoding parameter prediction value corresponding to the minimum key part quality standard value, the linear function is determined. A specific method for determining the target transcoding parameter prediction value based on the linear function may be as shown in the following equation (1):

$$ROI_{QPoffset_{target}} = ROI_{QPoffset_{min}} + \frac{ROI_{QPoffset_{max}} - ROI_{QPoffset_{min}}}{ROI_{VMAF_{max}} - ROI_{VMAF_{min}}} * (ROI_{VMAF_{target}} - ROI\_VMAF_{min})$$

$$(1)$$

where $ROI_{QPoffset_{target}}$ represents the target transcoding parameter prediction value corresponding to the expected key part quality . $ROI_{VMAF_{targetmax}}$ represents a minimum key part quality standard value in the key part quality standard values greater than the expected key part quality; $ROI_{VMAF_{min}}$ represents a maximum key part quality standard value in the key part quality standard values less than the expected key part quality; $ROI_{QPoffset_{max}}$ represents the initial transcoding parameter prediction value corresponding to the minimum key part quality standard value in the key part quality standard values greater than the expected key part quality; and $ROI_{QPoffset_{min}}$ represents the initial transcoding parameter prediction value corresponding to the maximum key part quality standard value in the key part quality standard values less than the expected key part quality.

For example, if the initial transcoding parameter prediction values are 20, 30, 40 and 50, the initial transcoding parameter prediction value of 20 corresponds to a key part quality standard value of 85, the initial transcoding parameter prediction value of 30 corresponds to a key part quality standard value of 86, the initial transcoding parameter prediction value of 40 corresponds to a key part quality standard value of 89, and the initial transcoding parameter prediction value of 50 corresponds to a key part quality standard value of 92, the expected key part quality of 88 is obtained, that is, $ROI_{VMAF_{target}}$ in the above equation (1) is 88, and a comparing result obtained by comparing the expected key part quality of 88 with the key part quality standard value set of {85, 86, 89, 92} is that the key part quality standard value set includes no value that is the same as the expected key part quality of 88. Therefore, the key part quality standard values greater than the expected key part quality of 88 that are obtained in the key part quality standard value set of {85, 86, 89, 92} are 89 and 92. Because 89 is less than 92, the key part quality standard value of 89 may be determined as the minimum key part quality standard value in the key part quality standard values greater than the expected key part quality of 88, that is, $ROI_{VMAF_{max}}$ in the above equation (1) is 89. The key part quality standard values less than the expected key part quality of 88 that are obtained in the key part quality standard value set of {85, 86, 89, 92} are 85 and 86. Because 86 is greater than 85, the key part quality standard value of 86 may be determined as the maximum key part quality standard value in the key part quality standard values less than the expected key part quality of 88, that is, $ROI_{VMAF_{min}}$ in the above equation (1) is 86. It can be seen that, in the key part quality standard value set of {85, 86, 89, 92}, the key part quality standard value of 86 and the key part quality standard value of 89 are two values which are closest to the expected key part quality of 88. An initial transcoding parameter prediction value corresponding to the key part quality standard value of 86 that is obtained is 30, that is, $ROI_{QPoffset_{min}}$ in the above equation (1) is 30. An initial transcoding parameter prediction value corresponding to the key part quality standard value of 89 that is obtained is 40, that is, $ROI_{QPoffset_{max}}$ in the above equation (1) is 40. Then, based on the above equation (1), a target transcoding parameter prediction value corresponding to the expected key part quality of 88 may be obtained according to

$$ROI_{QPoffset_{target}} = 30 + \frac{40-30}{89-} \times (88-86)$$, that is, $ROI_{QPoffset_{target}}$=36.7.

In some embodiments, it is to be understood that, in the case that the range corresponding to the key part quality standard value set does not include the expected key part quality, if the expected key part quality is greater than the maximum key part quality standard value in the key part quality standard value set, a maximum key part quality standard value and a second maximum key part quality standard value are obtained in the key part quality standard value set. Based on the maximum key part quality standard value, an initial transcoding parameter prediction value corresponding to the maximum key part quality standard value, the second maximum key part quality standard value, and an initial transcoding parameter prediction value corresponding to the second maximum key part quality standard value, a linear function is determined. Then, according to the linear function, a target transcoding parameter prediction value is determined. That is, $ROI_{VMAF_{max}}$ in the above equation (1) is the maximum key part quality standard value, $ROI_{VMAF_{min}}$ in the above equation (1) is the second maximum key part quality standard value, $ROI_{QPoffset_{max}}$ in the above equation (1) is the initial transcoding parameter prediction value corresponding to the maximum key part quality standard value, and $ROI_{QPoffset_{min}}$ in the above equation (1) is the initial transcoding parameter prediction value corresponding to the second maximum key part quality standard value. If the expected key part quality is less than the minimum key part quality standard value in the key part quality standard value set, a minimum key part quality standard value and a second minimum key part quality standard value are obtained in the key part quality standard value set. Based on the minimum key part quality standard value, an initial transcoding parameter prediction value corresponding to the minimum key part quality standard value, the second minimum key part quality standard value, and an initial transcoding parameter prediction value corresponding to the second minimum key part quality standard value, a linear function is determined. Then, according to the linear function, a target transcoding parameter prediction value is determined. That is, $ROI_{VMAF_{max}}$ in the above equation (1) is the second minimum key part quality standard value, $ROI_{VMAF_{min}}$ in the above equation (1) is the minimum key part quality standard value, $ROI_{QPoffset_{max}}$ in the above equation (1) is the initial transcoding parameter prediction value corresponding to the second minimum key part quality standard value, and $ROI_{QPoffset_{min}}$ in the above equation (1) is the initial transcoding parameter prediction value corresponding to the minimum key part quality standard value. For example, if the initial transcoding parameter prediction values outputted by the transcoding parameter prediction model are 20, 30, 40 and 50, the initial transcoding parameter prediction value of 20 corresponds to a key part quality standard value of 85, the initial transcoding parameter prediction value of 30 corresponds to a key part quality standard value of 86, the initial transcoding parameter prediction value of 40 corresponds to a key part quality standard value of 89, and the initial transcoding parameter prediction value of 50 corresponds to a key part quality standard value of 92, it can be seen that, the key part quality standard value set is {85, 86, 89, 92}. The expected key part quality of 94 is obtained, that is, $ROI_{VMAF_{target}}$ in the above equation (1) is 94, and a comparing result obtained by comparing the expected key part quality of 94 with the key part quality standard value set of {85, 86, 89, 92} is that the key part quality standard value set of {85, 86, 89, 92} includes no value that is the same as the expected key part quality of 94, and the expected key part quality of 94 is greater than the maximum key part quality standard value of 92 in the key part quality standard value set of {85, 86, 89, 92}. Then, a maximum key part quality standard value of 92, and a second maximum key part quality standard value of 89 in the key part quality standard value set of {85, 86, 89, 92} may be obtained. 89 may be substituted into $ROI_{VMAF_{min}}$ in the above equation (1), and 92 may be substituted into $ROI_{VMAF_{max}}$ in the above equation (1). Because an initial transcoding parameter prediction value corresponding to the key part quality standard value of 89 is 40, and an initial transcoding parameter prediction value corresponding to the key part quality standard value of 92 is 50, 40 may be substituted into $ROI_{QPoffset_{min}}$ in the above equation (1), and 50 may be substituted into $ROI_{QPoffset_{max}}$ in the above equation (1). Then, according to the above equation (1), a target transcoding parameter prediction value corresponding to the expected key part quality of 94 may be obtained according to

$$ROI_{QPoffset_{target}} = 40 + \frac{50-40}{92-89} \times (94-89)$$

, that is, $ROI_{QPoffset_{target}} = 56.7$.

In step S105, the target video is transcoded based on the target transcoding parameter prediction value.

In this embodiment of this application, the target video is transcoded based on the target transcoding parameter prediction value, so that the image quality of the key part region in the transcoded target video is identical to the foregoing expected key part quality. In addition, the overall image quality of the transcoded target video is identical to the expected background quality corresponding to the foregoing background prediction transcoding parameter.

In the embodiments of this application, by acquiring a background feature, a key part region feature, a background prediction transcoding parameter, and an expected key part quality of a target video, a target transcoding parameter prediction value meeting an expected background quality and matching with the expected key part quality may be obtained based on the background feature, key part region feature, and background prediction transcoding parameter of the target video. Because region-level features of the key part are used to process the details in the key part region in the target video, a predicted target transcoding parameter prediction value can be more adapted to the key part region on the basis of meeting the expected background quality. Therefore, by transcoding the target video based on the target transcoding parameter prediction value, the quality of the key part region of the transcoded target video can meet the expected key part quality. That is, the quality of the key part region after the video transcoding can be improved.

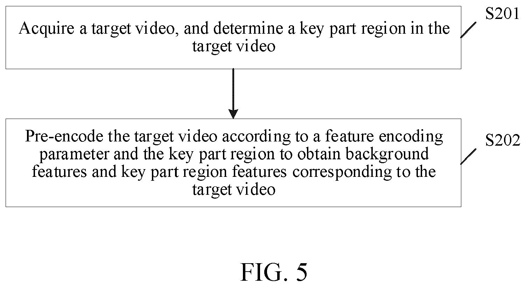

Further, reference is made to FIG. 5, which is a schematic flowchart of a process of acquiring a video feature of a target video according to an embodiment of this application. As shown in FIG. 5, the process may include the following steps S201 and S202.

In step S201, a target video is acquired, and a key part region is acquired in the target video.

In this embodiment of this application, the target video may be a short video or a video segment within a specified duration threshold. The duration threshold may be an artificially specified value, such as 20s, 25s, or the like. When the duration of an obtained initial original video is excessively long, that is, greater than the duration threshold, the initial video may be segmented. A specific method of segmenting the initial video may be as follows: the initial video is inputted into a segmentation encoder, a scene switch frame of the initial video is determined in the segmentation encoder, the initial video is segmented into at least two different video segments based on the scene switch frame, and a target video segment is acquired in the at least two different video segments and used as the target video. The scene switch frame may refer to a video frame of a different scene. For example, if scenes in two adjacent video frames are different, the two video frames of different scenes may be determined as scene switch frames. The scene in the video frame may include a scene with simple or complex texture, violent or gentle movement, or the like, and the scene may include a building, an environment, an action of a character, or the like. For example, a video frame a and a video frame b are adjacent video frames, the video frame a shows a stadium scene of a basketball player dunking, and the video frame b shows an auditorium scene of the audience shouting. Because the scene of the video frame a is different from the scene of the video frame b, both the video frame a and the video frame b may be used as scene switch frames, and video segmentation is performed between the video frame a and the video frame b.

In step S202, the target video is pre-encoded based on a feature encoding parameter and the key part region to obtain a background feature and a key part region feature corresponding to the target video.

In this embodiment of this application, the feature encoding parameter may refer to a configuration parameter in a feature encoder, and may be an artificially specified value. Based on the feature encoding parameter, the target video may be pre-encoded to obtain the background feature of the target video. The background feature is an overall feature obtained based on the overall content of the video. In the video frames of the target video, a video frame including a key part (for example, a face, a hand, a foot, or the like) is determined as a key video frame. The key video frame and the key part region are pre-encoded based on the feature encoding parameter, to obtain the key part region feature of the target video. The key part region feature is obtained based on the key part region. A specific method for obtaining the key part region feature based on the feature encoding parameter may be as follows: the key video frame is pre-encoded based on the feature encoding parameter to obtain a basic attribute of the key video frame, where the basic attribute may be an attribute such as a PSNR, an SSIM, and VMAF of the key part region of the key video frame, and the basic attribute may be used for representing the image quality of the key part region in the key video frame; the total number of the video frames of the target video and the total number of the key video frames are obtained, and based on the total number of the video frames of the target video and the total number of the key video frames, a key part frame number ratio may be determined; the area of the key part region in a key video frame and the total area of the key video frame are obtained, and a key part area ratio of the area of the key part region to the total area of the key video frame may be determined; and the basic attribute of the key video frame, the key part frame number ratio, and the key part area ratio may be determined as the key part region feature.

For a specific implementation of obtaining the background feature and the key part region feature of the target video, reference may be made to the description of obtaining the background feature and the key part region feature of the target video in step S101 in the embodiment corresponding to FIG. 3. Details are not repeated herein again.

In this embodiment of this application, by acquiring a background feature, a key part region feature, a background prediction transcoding parameter, and an expected key part quality of a target video, a target transcoding parameter prediction value matching with the expected key part quality may be obtained based on the background feature, the key part region feature, and background prediction transcoding parameter of the target video. Because region-level features of the key part are used to process the details in the key part region in the target video, a predicted target transcoding parameter prediction value can be more adapted to the key part region. Therefore, by transcoding the target video based on the target transcoding parameter prediction value, the quality of the key part region of the transcoded target video can meet the expected key part quality. That is, the quality of the key part region after the video transcoding can be improved.

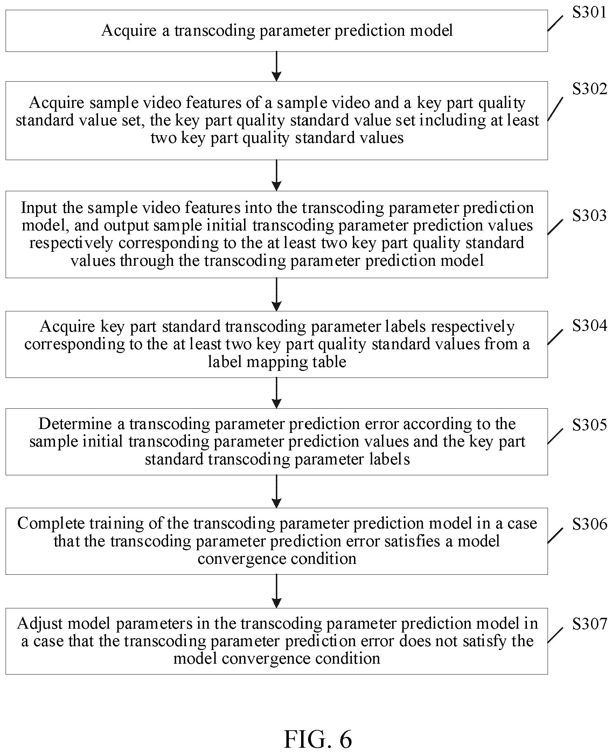

Further, reference is made to FIG. 6, which is a schematic flowchart of a process of training a transcoding parameter prediction model according to an embodiment of this application. As shown in FIG. 6, the process may include the following steps S301 to S307.

In step S301, a to-be-trained transcoding parameter prediction model is acquired.

In this application, the transcoding parameter prediction model may include an input layer, two fully connected layers and an output layer. The structure of the transcoding parameter prediction model may be as shown in the transcoding parameter prediction model 4000 in the embodiment corresponding to FIG. 4. The input layer is configured to receive data inputted into the transcoding parameter prediction model, and both of the two fully connected layers have model parameters. The fully connected layer may perform convolution calculation on the data inputted into the transcoding parameter prediction model based on the model parameters. The output layer may output a result obtained by the convolution calculation of the fully connected layers.

It is to be noted that the model parameters of the fully connected layers of the untrained transcoding parameter prediction model may be randomly generated values, which are used as initial parameters of the model parameters.

In step S302, a sample video feature of a sample video and a key part quality standard value set are acquired, the key part quality standard value set includes at least two key part quality standard values.

In this embodiment of this application, the sample video may refer to a large number of video segments within a duration threshold, and the large number of video segments may include content such as beauty makeup, food, sports, anchor shows, variety shows. The sample video feature includes a sample background feature and a sample key part region feature. For the specific implementation of acquiring the sample background feature and the sample key part region feature, reference may be made to the description of acquiring the background feature and the key part region feature of the target video in step S101 in the embodiment corresponding to FIG. 3. Details are not repeated herein again.

In step S303, the sample video feature is inputted to the transcoding parameter prediction model, and a sample initial transcoding parameter prediction value corresponding to each of the at least two key part quality standard values is outputted through the transcoding parameter prediction model.

In this application, the sample video feature (that is, the sample background feature and the sample key part region feature) are inputted into the transcoding parameter prediction model. Based on initial model parameters of the fully connected layers in the transcoding parameter prediction model, the convolution calculation may be performed on the sample video feature, to obtain at least two sample initial transcoding parameter prediction values of the sample video, and each sample initial transcoding parameter prediction value corresponds to a key part quality standard value.

In step S304, a key part standard transcoding parameter label corresponding to each of the at least two key part quality standard values is acquired from a label mapping table.

In this application, the label mapping table may be used for training a transcoding parameter prediction model, the label mapping table is constructed by a label encoder, and the label mapping table may be used for representing a correspondence between key part qualities and key part transcoding parameters. The label mapping table is the standard for training the transcoding parameter prediction model. The label mapping table may include a key part standard transcoding parameter corresponding to each key part quality standard value in the key part quality standard value set. The purpose of training the transcoding parameter prediction model is to make errors between the initial transcoding parameter prediction values outputted from the transcoding parameter prediction model and the key part standard transcoding parameter labels in the label mapping table fall within an error range (that is, very approaching).

A specific method for constructing the label mapping table may be as follows: a background test transcoding parameter and a key part test transcoding parameter are acquired, the sample video feature is inputted into a label encoder, and the sample video feature may be encoded based on the background test transcoding parameter and the key part test transcoding parameter in the label encoder, to obtain a key part test quality corresponding to both the background test transcoding parameter and the key part test transcoding parameter. Based on the mapping relationship between the key part test quality and the key part test transcoding parameter, the label mapping table is constructed. If the key part test quality does not include the key part quality standard value in the key part quality standard value set, a function may be constructed based on the key part test transcoding parameter and the key part test quality. Then, based on the function, a key part standard transcoding parameter label corresponding to the key part quality standard value is determined.

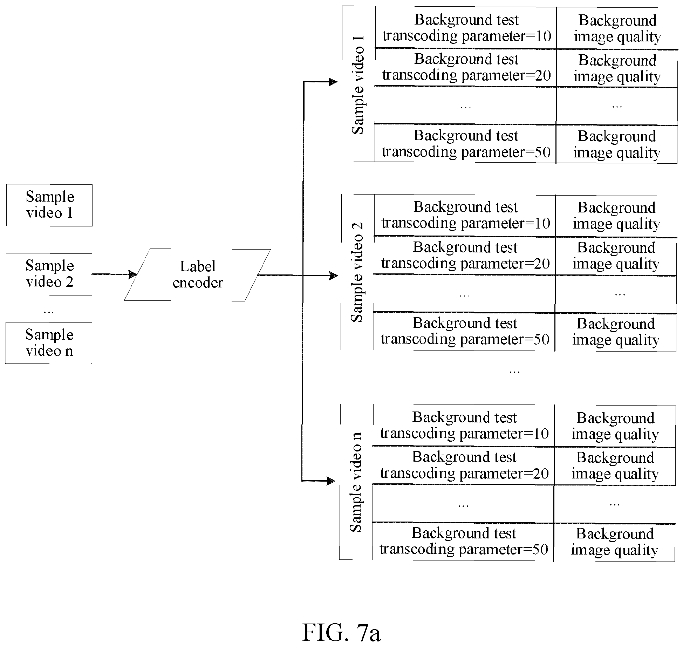

For ease of understanding, reference is also made to FIG. 7a, which is a schematic diagram of a process of obtaining a background image quality corresponding to background test transcoding parameter according to an embodiment of this application. As shown in FIG. 7a, sample videos include a sample video 1, a sample video 2, ..., and a sample video n. Taking the sample video 1 as an example, a sample video feature of the sample video 1 is inputted into a label encoder. In the label encoder, the sample video feature is encoded by using the background test transcoding parameters, to obtain background image qualities of the sample video 1 under different background test transcoding parameters. As shown in FIG. 7a, the background test transcoding parameter may be an integer from 10 to 50. Taking a background test transcoding parameter of 10 as an example, the sample video feature of the sample video 1 is encoded by using the background test transcoding parameter, to obtain a background image quality corresponding to the background test transcoding parameter of 10. For a specific implementation of acquiring the sample video feature of the sample video 1, reference may be made to the description of acquiring video feature of a target video in step S101 in the embodiment corresponding to FIG. 3. Details are not repeated herein again. In the same way, background image qualities of the sample video 2, the sample video 3, ..., and the sample video n under different background test transcoding parameters may be obtained.

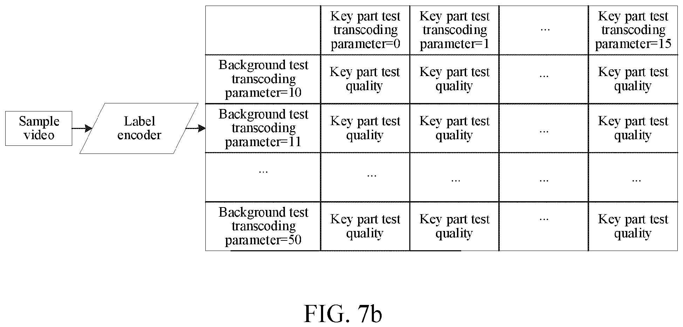

Further, for ease of understanding, reference is also made to FIG. 7b, which is a schematic diagram of a process of constructing a label mapping table according to an embodiment of this application. In the embodiment corresponding to FIG. 7a, a background image quality (that is, a frame-level image quality) corresponding to each background test transcoding parameter has been obtained. To obtain a key part region transcoding parameter required by the key part region in the video to reach a specified key part quality in the case that the background transcoding parameter is the background test transcoding parameter, in this application, key part test transcoding parameters inputted under different background test transcoding parameters may be different from each other, and the background test transcoding parameters are encoded together with the key part transcoding parameters, to obtain the key part test qualities corresponding to both the background test transcoding parameters and the key part test transcoding parameters. As shown in FIG. 7b, the key part test transcoding parameters may be a total of 16 consecutive integers from 0 to 15, and each background test transcoding parameter is encoded for 16 times (a total of 16 transcoding parameter test values including a key part test transcoding parameter 0, a key part test transcoding parameter 1, ..., and a key part test transcoding parameter 15), to obtain the key part test qualities corresponding to both the key part test transcoding parameters and the background test transcoding parameters. As shown in FIG. 7b, taking a background test transcoding parameter of 10 as an example, in the case that the background transcoding parameter is the background test transcoding parameter of 10, a key part test transcoding parameter of 0 is inputted, and then the sample video is encoded, to obtain the key part test quality corresponding to both the background test transcoding parameter of 10 and the key part test transcoding parameter of 0. In the same way, after encoding each background test transcoding parameter (background test transcoding parameters 10 to 50) for 16 times, the key part test transcoding parameters corresponding to different key part test qualities under each background test transcoding parameter may be obtained, and therefore the label mapping table may be obtained. As shown in FIG. 7b, the label mapping table includes a one-to-one correspondence between the key part test transcoding parameters and the key part test qualities. Subsequently, the key part test qualities in the label mapping table may compare with the key part quality standard value, if the key part test qualities in the label mapping table include the key part quality standard value, the key part test transcoding parameter corresponding to the key part quality standard value may be determined in the label mapping table as the key part standard transcoding parameter label, and is used for training the transcoding parameter prediction model, so that the initial transcoding parameter prediction value corresponding to the key part quality standard value outputted by the transcoding parameter prediction model continuously approach the key part standard transcoding parameter label. If the key part test qualities in the label mapping table do not include the key part quality standard value, a function may be constructed based on the key part test qualities and key part test transcoding parameters in the label mapping table. According to the function, the key part transcoding parameter corresponding to the key part quality standard value may be determined and used as the key part standard transcoding parameter label for training the transcoding parameter prediction model.

For example, taking a label mapping table of the following Table 1 as an example, as shown in Table 1, the row data in the label mapping table is used for representing the key part test transcoding parameters, the column data is used for representing the background test transcoding parameters, and one background test transcoding parameter and one key part test transcoding parameter together correspond to one key part test quality. For example, a background test transcoding parameter of 10 and a key part test transcoding parameter of 0 together correspond to a key part test quality of 56. Through the label mapping table shown as Table 1, key part test transcoding parameters corresponding to different key part test qualities may be obtained. The key part test qualities may be used as key part quality labels, and the key part test transcoding parameters corresponding to the key part quality labels are used as key part transcoding parameter labels. The key part quality standard value set of {84, 88, 92, 98} is obtained. Because there is no value that is the same as a key part quality standard value of 98 in the key part test qualities of the label mapping table, a function $y=2x+88$ is constructed based on a key part test transcoding parameter of 4, a key part test transcoding parameter of 4, a key part test quality of 94 and a key part test quality of 96, where y may be used for representing the key part test quality, x may be used for representing the key part test transcoding parameter, and the function $y=2x+88$ may be used for representing the relationship between the key part test transcoding parameter and the key part test quality. Then, the key part quality standard value of 98 is substituted into the function $y=2x+88$ (that is, $y=98$), and a key part standard transcoding parameter label of 5 corresponding to the key part quality standard value of 98 may be obtained. The key part standard transcoding parameter label of 5 and the key part quality standard value of 98 may be inserted into the label mapping table. That is, the label mapping table is updated, to obtain a label mapping table including all the key part quality standard values, and an updated label mapping table may be shown as Table 2.

Table 1

|     | 0  | 1  | 2  | 3  | 4  |
| --- | --- | --- | --- | --- | --- |
| 10  | 56 | 57 | 59 | 60 | 62 |
| 11  | 64 | 66 | 67 | 68 | 69 |
| 12  | 70 | 72 | 74 | 75 | 77 |
| 13  | 79 | 80 | 82 | 84 | 87 |
| 14  | 88 | 90 | 92 | 94 | 96 |

Table 2

|    | 0  | 1  | 2  | 3  | 4  | 5  |
|----|----|----|----|----|----|----|
| 10 | 56 | 57 | 59 | 60 | 62 | 98 |
| 11 | 64 | 66 | 67 | 68 | 69 | 98 |
| 12 | 70 | 72 | 74 | 75 | 77 | 98 |
| 13 | 79 | 80 | 82 | 84 | 87 | 98 |
| 14 | 88 | 90 | 92 | 94 | 96 | 98 |

Through the label mapping table as shown in Table 2, a key part transcoding parameter label of 3 corresponding to a key part quality standard value of 84, a key part transcoding parameter label of 0 corresponding to a key part quality standard value of 88, a key part transcoding parameter label of 2 corresponding to a key part quality standard value of 92, and a key part transcoding parameter label of 5 corresponding to a key part quality standard value of 98 may be obtained. Then, the key part transcoding parameter label of 3, the key part transcoding parameter label of 0, the key part transcoding parameter label of 2, and the key part transcoding parameter label of 5 may all be used as the key part standard transcoding parameter labels.

It is to be noted that the data in Table 1 or Table 2 is not representative, and is only a reference example made for ease of understanding.

It is to be noted that the above method for determining the key part transcoding parameter corresponding to the key part quality standard value includes but is not limited to constructing a function, and the method for constructing a function includes but is not limited to a manner of constructing a function based on the key part test transcoding parameters and the key part test qualities. Alternatively, the function may be constructed based on the background test transcoding parameters, the key part test transcoding parameters, and the key part test qualities, and the function includes but is not limited to a linear function.

In step S305, training of the transcoding parameter prediction model is completed in a case that the transcoding parameter prediction error meets a model convergence condition.

In this embodiment of this application, the model convergence condition may be an artificially specified error range, for example, the error range is 0 to 0.5. When the transcoding parameter prediction error is within the error range, it may be determined that transcoding parameter prediction value outputted by the transcoding parameter prediction model is not much different from the key part standard transcoding parameter label in the label mapping table, and the transcoding parameter prediction model may no longer be trained.

In some embodiments, it is to be understood that, in a case that the training of the transcoding parameter prediction model is completed, the trained transcoding parameter prediction model may be tested by using a video test set, and the video test set includes at least two test videos. A specific implementation of testing the transcoding parameter prediction model by using the video test set may be as follows: the test videos are inputted into the trained transcoding parameter prediction model, and the transcoding parameter prediction model may output the transcoding parameter prediction values; the key part quality standard value corresponding to each of the transcoding parameter prediction values is acquired, the key part standard transcoding parameter label corresponding to each of the key part quality standard values is determined through the label mapping table, and an error between the transcoding parameter prediction value and the key part standard transcoding parameter label is determined; if the error is within the error range, the transcoding parameter prediction model may be put into subsequent use; and if the error is not within the error range, it is meant that the value outputted by the trained transcoding parameter prediction model is still not accurate enough, and therefore, the transcoding parameter prediction model is further trained and then tested until the error between the transcoding parameter prediction value outputted during testing and the corresponding key part standard transcoding parameter label is within the error range.

In step S307, a model parameter in the transcoding parameter prediction model is adjusted in a case that the transcoding parameter prediction error does not meet the model convergence condition.

In this embodiment of this application, if the transcoding parameter prediction error does not meet the model convergence condition, that is, the transcoding parameter prediction error is not within the error range, it is meant that the transcoding parameter prediction value outputted by the transcoding parameter prediction model is quite different from the key part standard transcoding parameter label in the label mapping table, which indicates that the prediction value outputted by the transcoding parameter prediction model is not accurate. Therefore, the model parameter of the transcoding parameter prediction model may be adjusted based on the transcoding parameter prediction error, a sample video feature of the next sample video are further inputted, the adjusted model parameter is used for performing convolution calculation on the sample video feature, to output a key part transcoding parameter prediction value of the sample video and calculate a new transcoding parameter prediction error. If the new transcoding parameter prediction error meets the convergence condition, the training of the transcoding parameter prediction model is completed. If the new transcoding parameter prediction error does not meet the model convergence condition, the model parameter of the transcoding parameter prediction model is further adjusted based on the new transcoding parameter prediction error.

In the embodiments of this application, by acquiring a background feature, a key part region feature, a background prediction transcoding parameter, and an expected key part quality of a target video, a target transcoding parameter prediction value meeting an expected background quality and matching with the expected key part quality may be obtained based on the background feature, the key part region feature, and the background prediction transcoding parameter of the target video. Because region-level features of the key part are used to process the details in the key part region in the target video, a predicted target transcoding parameter prediction value can be more adapted to the key part region on the basis of meeting the expected background quality. Therefore, by transcoding the target video based on the target transcoding parameter prediction value, the quality of the key part region of the transcoded target video can meet the expected key part quality. That is, the quality of the key part region after the video transcoding can be improved.

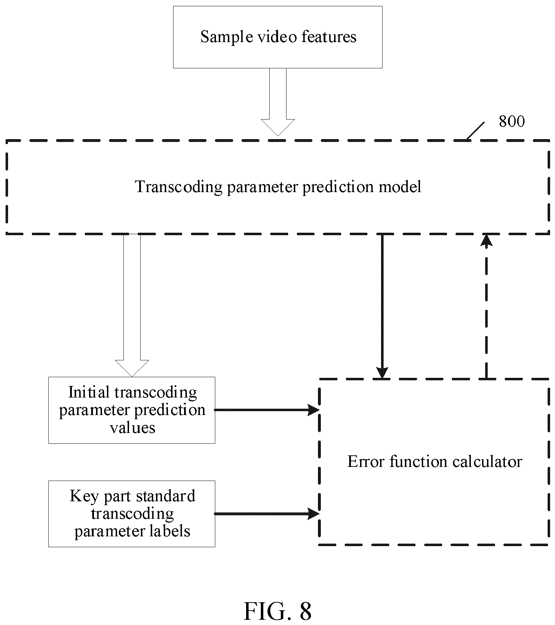

Refer to FIG. 8, which is a schematic diagram of a scenario of training a transcoding parameter prediction model according to an embodiment of this application. As shown in FIG. 8, a sample video feature is inputted into a transcoding parameter prediction model 800, and a fully connected layer in the transcoding parameter prediction model 800 may perform convolution calculation on the sample video feature, to obtain and output the initial transcoding parameter prediction values. The initial transcoding parameter prediction values are in a one-to-one correspondence to key part quality standard values, and key part standard transcoding parameter labels corresponding to the key part quality standard values may be obtained based on a label mapping table. An error function calculator may calculate a transcoding parameter prediction error based on the initial transcoding parameter prediction value and the key part standard transcoding parameter label. Based on the transcoding parameter prediction error, the model parameter of the transcoding parameter prediction model may be adjusted. After the parameter is adjusted, the above method is adopted to input a new sample video feature into the transcoding parameter prediction model 800 again, to output initial transcoding parameter prediction values again, and a transcoding parameter prediction error is calculated again. The process is repeated until the transcoding parameter prediction error meets the model convergence condition. In this case, the training of the transcoding parameter prediction model is completed, and the trained transcoding parameter prediction model may be used for predicting key part transcoding parameters subsequently.

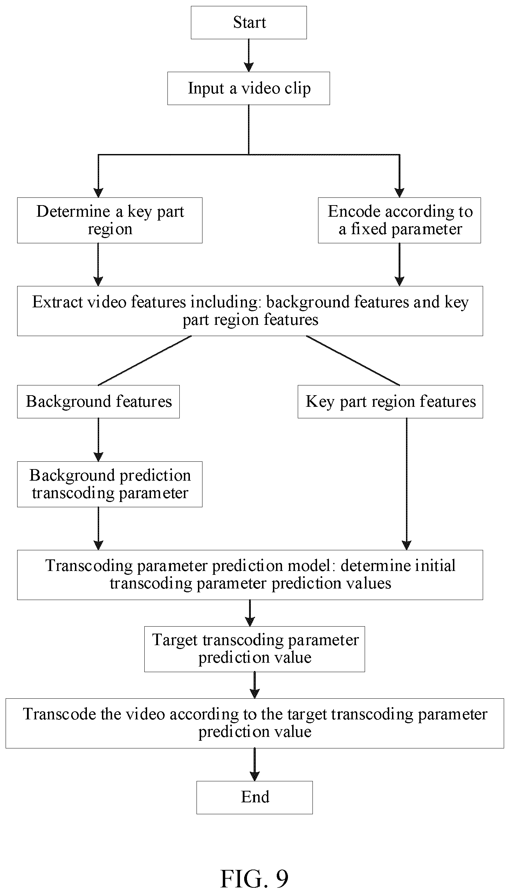

Refer to FIG. 9, which is a diagram of a system architecture according to an embodiment of this application. As shown in FIG. 9, in the architecture of this application, a video segment is inputted into a feature encoder. The video segment may be a complete video, or may be a video segment obtained from a complete video. For a specific implementation of acquiring a video segment from a complete video, reference may be made to the description of acquiring the target video in step S201 in the embodiment corresponding to FIG. 5. Details are not repeated herein again. In the feature encoder, a key part region of the video segment may be determined, and the video segment may be pre-encoded by using a fixed feature encoding parameter, so that the video feature of the video segment may be extracted. The video feature may include a background feature and a key part region feature. For the specific implementation of obtaining the background feature and the key part region feature, reference may be made to the description of obtaining the background feature and the key part region feature in step S101 in the embodiment corresponding to FIG. 3. Details are not repeated herein again.

Further, based on the background feature, the background prediction transcoding parameter may be obtained. The background feature, the key part region feature and the background prediction transcoding parameter are inputted into the transcoding parameter prediction model that has been trained and tested. A fully connected layer in the transcoding parameter prediction model may perform convolution calculation on the background feature, the key part region feature, and the background prediction transcoding parameter, to obtain the initial transcoding parameter prediction values corresponding to at least two key part quality standard values. The key part quality standard value is a quality value inputted into the transcoding parameter prediction model before inputting the background feature, the key part region feature and the background prediction transcoding parameter into the transcoding parameter prediction model. The key part quality standard value is an artificially specified quality prediction value which is close to the expected key part quality, and may or may not include the expected key part quality. The expected key part quality is an expected value of the image quality of the key part region in the video segment after the video segment is transcoded. For a specific implementation of the transcoding parameter prediction model determining the initial transcoding parameter prediction value corresponding to the key part quality standard value, reference may be made to the description of the transcoding parameter prediction model determining the initial transcoding parameter prediction values in step S 103 in the embodiment corresponding to FIG. 3. Details are not repeated herein again. For a specific implementation of training the transcoding parameter prediction model, reference may be made to the description of training the transcoding parameter prediction model in the embodiment corresponding to FIG. 8. Details are not repeated herein again either.

Subsequently, after the transcoding parameter prediction model outputs the initial transcoding parameter prediction values, a key part quality standard value set corresponding to the key part quality standard values may be obtained. Based on the key part quality standard value set, the initial transcoding parameter prediction value, and the expected key part quality, a target transcoding parameter prediction value matching with the expected key part quality may be determined. For a specific implementation of determining the target transcoding parameter prediction value based on the key part quality standard value set, the initial transcoding parameter prediction value, and the expected key part quality, reference may be made to the description of step S103 in the embodiment corresponding to FIG. 3. Details are not repeated herein again.

Further, after the target transcoding parameter prediction value is obtained, the video segment may be transcoded based on the target transcoding parameter prediction value. Because region-level features of the key part are used to process the details in the key part region in the target video on the basis of meeting the expected background quality, the image quality of the key part region in the video segment may be controlled and adjusted to improve the image quality of the key part region in the transcoded video.

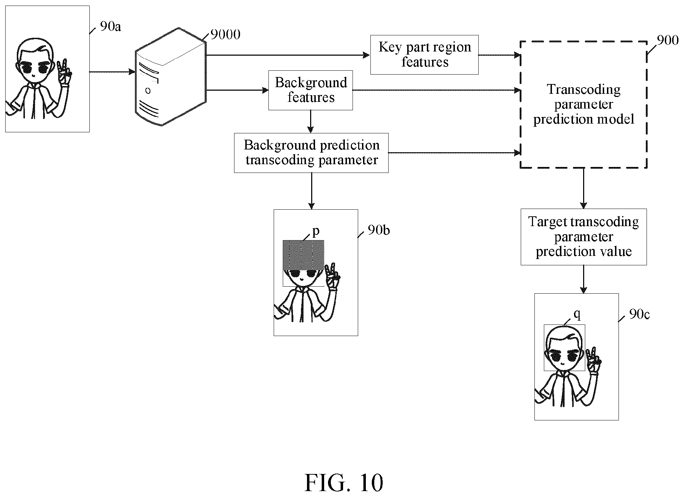

Refer to FIG. 10, which is a schematic diagram of a scenario of transcoding a video based on a target transcoding parameter prediction value according to an embodiment of this application. In the scenario shown in FIG. 10, a key part is a face, and a key part region is a face region. As shown in FIG. 10, a service server 9000 obtains a video 90a, and the service server 9000 may obtain a background feature and a key part region feature (for example, a face region feature) of the video 90a. Based on the background feature, a background prediction transcoding parameter corresponding to an expected background quality (a frame-level image quality) may be obtained. Based on the background prediction transcoding parameter, the video 90a is transcoded to obtain a transcoded video 90b. As shown in FIG. 10, because detailed features of a face region p in the video 90a are not put into consideration, the image quality of the face region p in the transcoded video 90b is not high and the face region p in the transcoded video 90b is blurred. The key part region feature, the background feature and background prediction transcoding parameter are inputted into a transcoding parameter prediction model 900 together. Through the transcoding parameter prediction model, a target transcoding parameter prediction value corresponding to the expected key part quality (for example, an expected face quality) may be determined. Further, based on the target transcoding parameter prediction value, the video 90a is transcoded to obtain a transcoded video 90c. The image quality of the background in the video 90c is identical to the image quality of the background in the video 90b, and the image quality of the face region p in the video 90c is identical to the expected face quality. It can be seen that, because the detailed features in the face region p are put into consideration, the face region p in the transcoded video 90c has higher image quality and higher definition than the face region p in the video 90b.

To further illustrate the beneficial effects of this application, an experimental comparison table is provided in the embodiments of this application. As shown in Table 3, in this experiment, 56 video segments each of which has a duration of 20s are used as a test data set. A face is taken as a key part, and a face region is taken as a key part region. A bit rate is used as a transcoding parameter for testing. Data of attribute information such as a bit rate, a VMAF, and a SSIM shown in Table 3 of different video segments are obtained, average values of the data are obtained for the 56 video segments, and the average values are used as final experimental test data (that is, the video feature). As can be seen from Table 3, for the unchanged overall quality, a face bit rate parameter (that is, the target transcoding parameter prediction value) matching with the expected face quality may be predicted for different expected qualities of the face. For example, when an overall quality is 88, a background bit rate parameter (for example, a background prediction bit rate) is 33.94. If an image quality of a face region is expected to be 92 after video transcoding (for example, an expected face quality is 90), a face bit rate parameter of 3.88 matching with an expected face quality of 92 may be obtained based on the data such as a bit rate, a VMAF, a PSNR, a face region quality, a non-face region quality, a face region bit rate and a background bit rate parameter. If the image quality of the face region is expected to be 94 after the video transcoding, a face bit rate parameter of 5.41 matching with an expected face quality of 94 may be predicted. In this experiment, it can be proved that, by taking the face region into consideration, features of the face region are extracted, the face bit rate corresponding to the expected face quality is predicted based on the features of the face region. Therefore, during video transcoding, if the image quality of the face region is expected to be a specific quality value, only a face bit rate option needs to be set as a face bit rate parameter corresponding to the quality value. In this way, the image quality of the face region in the video may be controlled, the image quality of the face region can be improved, and the image quality of the face region can be independently adjusted.

Additionally, not only the image quality of the face region can be improved, but also the bit rate can be saved. As shown in the experimental comparison table as Table 3, in the row of the overall quality of 94, a face region quality is 92.60, and a bit rate is 2372.67 kbps. With this method, if an overall quality is 90 and a face region quality is 94.02 (which is identical to the overall quality of 94), a bit rate is 1828 kps, which is saved by 22% compared with the bit rate of 2372.67 kbps when the overall quality is 94.

EP 4 024 862 A1

Table 3

| Test set: 56 segments, 20s | | | | | | | | | | | | Bit rate increase | |
|---|---|---|---|---|---|---|---|---|---|---|---|---|---|
| Overall quality | Expected Face quality | Bit rate (kbps) | VMAF | SSIM | Face PSNR region quality | | Non-face region quality | Face region bit rate | Non-face region bit rate | Background bit rate parameter | Face bit rate parameter | ROI region | Overall |
| 88 | - | 1610.68 | 89.07 | 0.97 | 39.56 | 84.61 | 89.13 | 34.71 | 1516.91 | 33.94 | 0.00 | | |
| | 92 | 1639.02 | 89.33 | 0.97 | 39.65 | 91.85 | 89.17 | 56.09 | 1523.39 | 33.94 | 3.88 | 61.61% | 1.76% |
| | 94 | 1655.11 | 89.40 | 0.97 | 39.67 | 93.82 | 89.18 | 68.42 | 1526.87 | 33.94 | 5.41 | 97.15% | 2.76% |
| 90 | - | 1791.51 | 90.81 | 0.97 | 40.07 | 87.25 | 90.85 | 38.93 | 1690.97 | 32.94 | 0.00 | | |
| | 94 | 1828.27 | 91.05 | 0.97 | 40.15 | 94.02 | 90.88 | 66.72 | 1699.13 | 32.94 | 4.19 | 71.37% | 2.05% |
| | 96 | 1855.03 | 91.13 | 0.97 | 40.18 | 96.01 | 90.89 | 87.40 | 1705.01 | 32.94 | 6.22 | 124.29% | 3.55% |
| 94 | - | 2372.67 | 94.44 | 0.98 | 41.35 | 92.60 | 94.42 | 53.47 | 2250.75 | 30.27 | 0.00 | | 32.44% |
| 92 | - | 2034.14 | 92.62 | 0.97 | 40.66 | 89.97 | 92.63 | 44.87 | 1924.41 | 30.88 | 0.00 | | |
| | 94 | 2060.92 | 92.77 | 0.97 | 40.72 | 94.26 | 92.65 | 65.20 | 1930.46 | 30.88 | 2.78 | 37.45% | 1.32% |
| | 96 | 2086.40 | 92.85 | 0.97 | 40.72 | 96.14 | 92.66 | 84.68 | 1936.15 | 30.88 | 4.94 | 87.01% | 2.57% |

18

Therefore, through this experiment, the beneficial effects of this application are that some regions in video transcoding may be independently controlled and adjusted, such that the quality of the key part region after video transcoding can be improved, and the transcoding parameter can be saved.

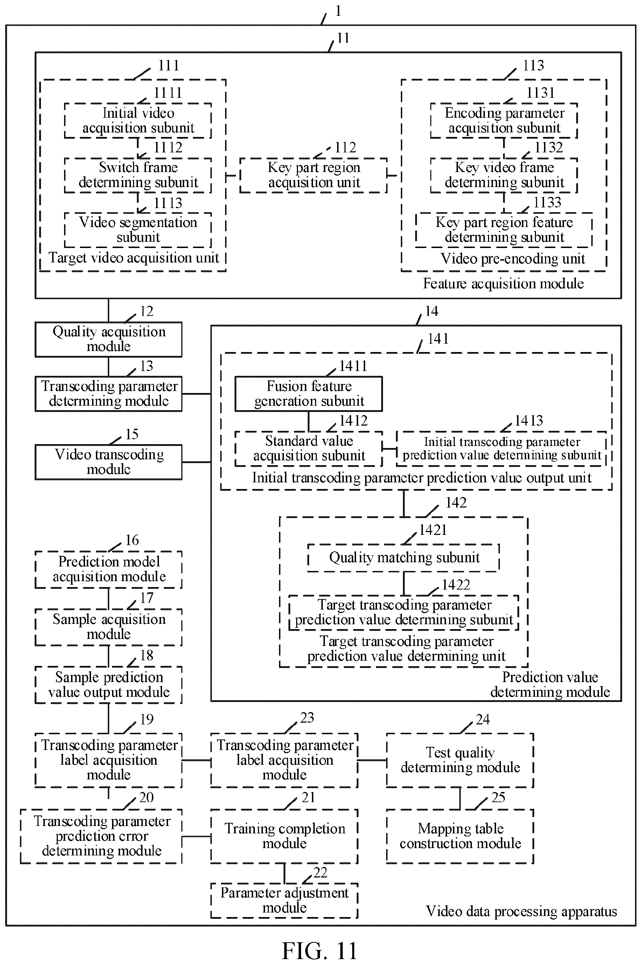

Reference is made to FIG. 11, which is a schematic structural diagram of a video data processing apparatus according to an embodiment of this application. As shown in FIG. 11, the video data processing apparatus may be a computer program (including a program code) running in a computer device. For example, the video data processing apparatus is application software. The apparatus may be used for performing steps in the method according to the embodiments of this application. As shown in FIG. 11, the video data processing apparatus 1 may include: a feature acquisition module 11, a quality acquisition module 12, a transcoding parameter determining module 13, a prediction value determining module 14 and a video transcoding module 15. The feature acquisition module 11 is configured to acquire a video feature of a target video, the video feature includes a background feature and a key part region feature. The quality acquisition module 12 is configured to acquire an expected key part quality corresponding to the target video, the expected key part quality is an expected value of an image quality of the key part in a transcoded target video obtained by transcoding the target video. The transcoding parameter determining module 13 is configured to determine a background prediction transcoding parameter of the target video based on the background feature, the background prediction transcoding parameter matches with an expected background quality, and the expected background quality is an expected value of an overall image quality of the transcoded target video after transcoding the target video. The prediction value determining module 14 is configured to determine a target transcoding parameter prediction value meeting the expected background quality and matching with the expected key part quality based on the background feature, the key part region feature and the background prediction transcoding parameter. The video transcoding module 15 is configured to transcode the target video based on the target transcoding parameter prediction value.

For specific implementations of the feature acquisition module 11, the quality acquisition module 12, the transcoding parameter determining module 13, the prediction value determining module 14, and the video transcoding module 15, reference may be made to the description of step S101 to step S105 in the embodiment corresponding to FIG. 3. Details are not repeated herein again.

Referring to FIG. 11, the feature acquisition module 11 may include: a target video acquisition unit 111, a key part region acquisition unit 112, and a video pre-encoding unit 113. The target video acquisition unit 111 is configured to acquire the target video. The key part region acquisition unit 112 is configured to acquire a key part region in the target video. The video pre-encoding unit 113 is configured to pre-encode the target video based on a feature encoding parameter and the key part region to obtain the background feature and the key part region feature corresponding to the target video.

For specific implementations of the target video acquisition unit 111, the key part region acquisition unit 112, and the video pre-encoding unit 113, reference may be made to the description of step S201 and step S202 in the embodiment corresponding to FIG. 5. Details are not repeated herein again.

Referring to FIG. 11, the video pre-encoding unit 113 may include: an encoding parameter acquisition subunit 1131, a key video frame determining subunit 1132, and a key part region feature determining subunit 1133. The encoding parameter acquisition subunit 1131 is configured to acquire the feature encoding parameter, and pre-encode the target video based on the feature encoding parameter to obtain the background feature of the target video. The key video frame determining subunit 1132 is configured to determine a video frame including the key part as a key video frame in video frames of the target video. The key part region feature determining subunit 1133 is configured to pre-encode the key video frame and the key part region based on the feature encoding parameter to obtain the key part region feature of the target video. The key part region feature determining subunit 1133 is further configured to pre-encode the key video frame based on the feature encoding parameter to obtain a basic attribute of the key video frame.

The key part region feature determining subunit 1133 is further configured to acquire the total number of the video frames of the target video, and the total number of the key video frames, and determine a key part frame number ratio of the total number of the video frames of the target video to the total number of the key video frames. The key part region feature determining subunit 1133 is further configured to acquire an area of the key part region in a key video frame, and a total area of the key video frame, and determine a key part area ratio of the area of the key part region to the total area of the key video frame. The key part region feature determining subunit 1133 is further configured to determine a basic attribute of the key video frame, the key part frame number ratio and the key part area ratio as the key part region feature.

For specific implementations of the encoding parameter acquisition subunit 1131, the key video frame determining subunit 1132 and the key part region feature determining subunit 1133, reference may be made to the description of step S202 in the embodiment corresponding to FIG. 5. Details are not repeated herein again.

Referring to FIG. 11, the target video acquisition unit 111 may include: an initial video acquisition subunit 1111, a switch frame determining subunit 1112, and a video segmentation subunit 1113. The initial video acquisition subunit 1111 is configured to acquire an initial video. The switch frame determining subunit 1112 is configured to input the initial video into a segmentation encoder, and determine a scene switch frame of the initial video in the segmentation encoder.

The video segmentation subunit 1113 is configured to segment the initial video into video segments corresponding to at least two different scenes based on the scene switch frame, and acquire a target video segment from the video segments as the target video.

For specific implementations of the initial video acquisition subunit 1111, the switch frame determining subunit 1112 and the video segmentation subunit 1113 reference may be made to the description of step S201 in the embodiment corresponding to FIG. 5. Details are not repeated herein again.

Referring to FIG. 11, the prediction value determining module 14 may include: an initial transcoding parameter prediction value output unit 141 and a target transcoding parameter prediction value determining unit 142. The initial transcoding parameter prediction value output unit 141 is configured to input the background feature, the key part region feature and the background prediction transcoding parameter into a transcoding parameter prediction model, and output at least two initial transcoding parameter prediction values through the transcoding parameter prediction model, key part quality standard values respectively corresponding to the at least two initial transcoding parameter prediction values are different from each other. The target transcoding parameter prediction value determining unit 142 is configured to acquire the expected key part quality, and determine the target transcoding parameter prediction value corresponding to the expected key part quality based on a mapping relationship between the at least two initial transcoding parameter prediction values and the key part quality standard values.

For specific implementations of the initial transcoding parameter prediction value output unit 141 and the target transcoding parameter prediction value determining unit 142, reference may be made to the description of step S104 in the embodiment corresponding to FIG. 3. Details are not repeated herein again.

Referring to FIG. 11, the initial transcoding parameter prediction value output unit 141 may include: a fusion feature generation subunit 1411, a standard value acquisition subunit 1412, and an initial transcoding parameter prediction value determining subunit 1413. The fusion feature generation subunit 1411 is configured to input the background feature, the key part region feature and the background prediction transcoding parameter into a fully connected layer of the transcoding parameter prediction model, and generate a fusion feature in the fully connected layer. The standard value acquisition subunit 1412 is configured to acquire a key part quality standard value set, the key part quality standard value set includes at least two key part quality standard values. The initial transcoding parameter prediction value determining subunit 1413 is configured to determine an initial transcoding parameter prediction value corresponding to each of the key part quality standard values based on the fusion feature.

For specific implementations of the fusion feature generation subunit 1411, the standard value acquisition subunit 1412, and the initial transcoding parameter prediction value determining subunit 1413, reference may be made to the description of step S104 in the embodiment corresponding to FIG. 3. Details are not repeated herein again.

Referring to FIG. 11, the target transcoding parameter prediction value determining unit 142 may include: a quality matching subunit 1421 and a target transcoding parameter prediction value determining subunit 1422. The quality matching subunit 1421 is configured to compare the expected key part quality with the key part quality standard value set. The target transcoding parameter prediction value determining subunit 1422 is configured to determine, in a case that the key part quality standard value set comprises a key part quality standard value that is identical to the expected key part quality, an initial transcoding parameter prediction value corresponding to the key part quality standard value that is the same as the expected key part quality in the at least two initial transcoding parameter prediction values based on the mapping relationship between the at least two initial transcoding parameter prediction values and the key part quality standard values, as the target transcoding parameter prediction value. The target transcoding parameter prediction value determining subunit 1422 is further configured to determine, in a case that the key part quality standard value set comprises no key part quality standard value that is identical to the expected key part quality, determine a linear function based on the mapping relationship between the at least two initial transcoding parameter prediction values and the key part quality standard values, and determine the target transcoding parameter prediction value based on the linear function and the expected key part quality.

The target transcoding parameter prediction value determining subunit 1422 is further configured to acquire key part quality standard values greater than the expected key part quality in the key part quality standard value set, and determine a minimum key part quality standard value in the key part quality standard values greater than the expected key part quality. The target transcoding parameter prediction value determining subunit 1422 is further configured to acquire key part quality standard values less than the expected key part quality in the key part quality standard value set, and determine a maximum key part quality standard value in the key part quality standard values less than the expected key part quality. The target transcoding parameter prediction value determining subunit 1422 is further configured to determine an initial transcoding parameter prediction value corresponding to the maximum key part quality standard value, and an initial transcoding parameter prediction value corresponding to the minimum key part quality standard value based on the mapping relationship between the at least two initial transcoding parameter prediction values and the key part quality standard values. The target transcoding parameter prediction value determining subunit 1422 is further configured to determine the linear function based on the maximum key part quality standard value, the initial transcoding parameter prediction value corresponding to the maximum key part quality standard value, the minimum key part quality standard value, and the initial transcoding parameter prediction value corresponding to the minimum key part quality standard value.

For specific implementations of the quality matching subunit 1421 and the target transcoding parameter prediction value determining subunit 1422, reference may be made to the description of step S104 in the embodiment corresponding to FIG. 3. Details are not repeated herein again.

Referring to FIG. 11, the video data processing apparatus 1 may include: a feature acquisition module 11, a quality acquisition module 12, a transcoding parameter determining module 13, a prediction value determining module 14, and a video transcoding module 15, and may further include: a prediction model acquisition module 16, a sample acquisition module 17, a sample prediction value output module 18, a transcoding parameter label acquisition module 19, a transcoding parameter prediction error determining module 20, a training completion module 21 and a parameter adjustment module 22. The prediction model acquisition module 16 is configured to acquire a transcoding parameter prediction model to be trained. The sample acquisition module 17 is configured to acquire a sample video feature of a sample video and a key part quality standard value set, the key part quality standard value set includes at least two key part quality standard values. The sample prediction value output module 18 is configured to input the sample video feature into the transcoding parameter prediction model, and output a sample initial transcoding parameter prediction value corresponding to each of the at least two key part quality standard values through the transcoding parameter prediction model. The transcoding parameter label acquisition module 19 is configured to acquire a key part standard transcoding parameter label corresponding to each of the at least two key part quality standard values from a label mapping table. The transcoding parameter prediction error determining module 20 is configured to determine a transcoding parameter prediction error based on the sample initial transcoding parameter prediction value and the key part standard transcoding parameter label. The training completion module 21 is configured to complete training of the transcoding parameter prediction model in a case that the transcoding parameter prediction error meets a model convergence condition. The parameter adjustment module 22 is configured to adjust a model parameter in the transcoding parameter prediction model in a case that the transcoding parameter prediction error does not meet the model convergence condition.

For specific implementations of the prediction model acquisition module 16, the sample acquisition module 17, the sample prediction value output module 18, the transcoding parameter label acquisition module 19, the transcoding parameter prediction error determining module 20, the training completion module 21 and the parameter adjustment module 22, reference may be made to the description of step S301 to step S307 in the embodiment corresponding to FIG. 6. Details are not repeated herein again.

Referring to FIG. 11, the video data processing apparatus 1 may include: a feature acquisition module 11, a quality acquisition module 12, a transcoding parameter determining module 13, a prediction value determining module 14, a video transcoding module 15, a prediction model acquisition module 16, a sample acquisition module 17, a sample prediction value output module 18, a transcoding parameter label acquisition module 19, a transcoding parameter prediction error determining module 20, a training completion module 21 and a parameter adjustment module 22, and may further include: a test transcoding parameter acquisition module 23, a test quality determining module 24 and a mapping table construction module 25. The test transcoding parameter acquisition module 23 is configured to acquire multiple background test transcoding parameters and multiple key part test transcoding parameters. The test quality determining module 24 is configured to input the sample video feature into a label encoder, and encode, in the label encoder, the sample video feature based on the multiple background test transcoding parameters and the multiple key part test transcoding parameters, to obtain a key part test quality corresponding to each of the key part test transcoding parameters under each of the background test transcoding parameters. The mapping table construction module 25 is configured to construct a label mapping table based on a mapping relationship between the key part test qualities and the key part test transcoding parameters.

The mapping table construction module 25 is further configured to determine, in a case that key part test quality in the constructed label mapping table includes the at least two key part quality standard values, a key part test transcoding parameter corresponding to each of the at least two key part quality standard values in the label mapping table, and use the key part test transcoding parameter as the key part standard transcoding parameter label; and determine, in a case that the key part test quality in the constructed label mapping table does not include the at least two key part quality standard values, a key part transcoding parameter corresponding to each of the key part quality standard values based on the key part test qualities and the key part test transcoding parameters in the constructed label mapping table, and use the key part transcoding parameter as the key part standard transcoding parameter label.

For specific implementations of the test transcoding parameter acquisition module 23, the test quality determining module 24, and the mapping table construction module 25, reference may be made to the description of constructing the label mapping table in step S304 in the embodiment corresponding to FIG. 6. Details are not repeated herein again.

In this embodiment of this application, by acquiring a background feature, a key part region feature, a background prediction transcoding parameter, and an expected key part quality of a target video, a target transcoding parameter prediction value matching with the expected key part quality may be obtained based on the background feature, the key part region feature, and the background prediction transcoding parameter of the target video. Because region-level features of the key part are used to process the details in the key part region in the target video, a predicted target transcoding parameter prediction value can be more adapted to the key part region. Therefore, by transcoding the target video based on the target transcoding parameter prediction value, the quality of the key part region of the transcoded target video can meet the expected key part quality. That is, the quality of the key part region after the video transcoding can be improved.

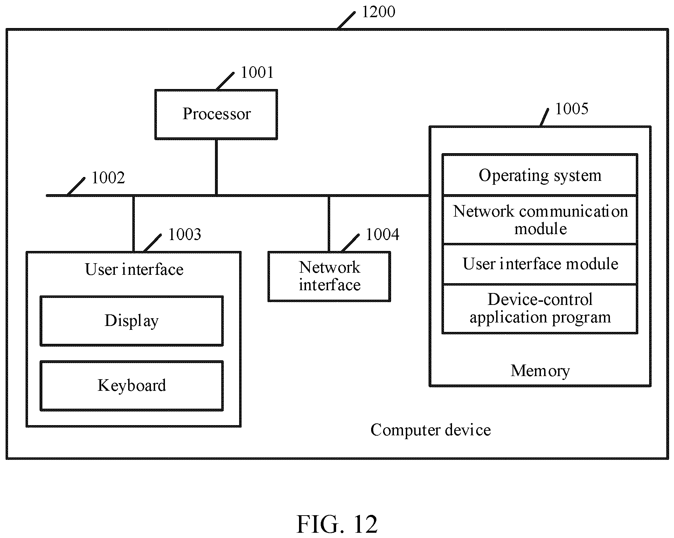

Further, Referring to FIG.12, FIG. 12 is a schematic structural diagram of a computer device according to an embodiment of this application. As shown in FIG. 12, the apparatus 1 in the embodiment corresponding to FIG. 11 may be applied to the computer device 1200. The computer device 1200 may include: a processor 1001, a network interface 1004, and a memory 1005. In addition, the computer device 1200 further includes: a user interface 1003 and at least one communication bus 1002. The communication bus 1002 is configured to implement connection and communication between the components. The user interface 1003 may include a display, a keyboard, and optionally, the user interface 1003 may further include a standard wired interface and a standard wireless interface. The network interface 1004 may include a standard wired interface and a standard wireless interface (for example, a Wi-Fi interface). The memory 1005 may be a high-speed RAM, or may be a non-volatile memory, for example, at least one magnetic disk memory. The memory 1005 may alternatively be at least one storage apparatus located away from the processor 1001. As shown in FIG. 12, the memory 1005 used as a computer-readable storage medium may include an operating system, a network communication module, a user interface module, and a device-control application program.

In the computer device 1200 shown in FIG. 12, the network interface 1004 may provide a network communication function, the user interface 1003 is mainly configured to provide an input interface for a user, and the processor 1001 may be configured to invoke a device-control application program stored in the memory 1005 to:

acquire a video feature of a target video, the video feature including a background feature and a key part region feature;

acquire an expected key part quality corresponding to the target video;

determine a background prediction transcoding parameter of the target video based on the background feature;

determine a target transcoding parameter prediction value matching with the expected key part quality based on the background feature, the key part region feature and the background prediction transcoding parameter; and

transcode the key part region in the target video based on the target transcoding parameter prediction value.

It is to be understood that, the computer device 1200 described in this embodiment of this application may implement the description of the video data processing method in the foregoing embodiments corresponding to FIG. 3 to FIG. 10, and may also implement the description of the video data processing apparatus 1 in the foregoing embodiment corresponding to FIG. 11. Details are not described herein again. In addition, the description of beneficial effects of the same method are not described herein again.

In addition, a computer-readable storage medium is further provided according to the embodiments of this application. The computer-readable storage medium stores a computer program executed by the computer device 1200 for video data processing, and the computer program includes program instructions. When executing the program instructions, the processor may perform the the video data processing method described in the foregoing embodiments corresponding to FIG. 3 to FIG. 10. Therefore, details are not described herein again. In addition, the beneficial effects of the same method are not described herein again. For technical details that are not disclosed in the embodiments of the computer-readable storage medium of this application, reference is made to the method embodiments of this application.

The computer-readable storage medium may be an internal storage unit of the video data processing apparatus or the computer device provided in any one of the foregoing embodiments, for example, a hard disk or a memory of the computer device. The computer-readable storage medium may alternatively be an external storage device of the computer device, for example, a pluggable hard disk equipped on the computer device, a smart media card (SMC), a secure digital (SD) card, a flash card, or the like. Further, the computer-readable storage medium may include both an internal storage unit and an external storage device of the computer device. The computer-readable storage medium is configured to store the computer program and another program and data that are required by the computer device. The computer-readable storage medium may be further configured to temporarily store data that has been outputted or data to be outputted.

In the specification, claims, and drawings of this application, the terms such as "first", and "second" of the embodiments of this application are intended to distinguish between different objects but do not indicate a particular order. In addition, the terms "include" and any variant thereof are intended to cover a non-exclusive inclusion. For example, a process, method, apparatus, product, or device that includes a series of steps or modules is not limited to the listed steps or modules; and instead, further optionally includes a step or module that is not listed, or further optionally includes another step or unit that is intrinsic to the process, method, apparatus, product, or device.

A person of ordinary skill in the art may be aware that the units and algorithm steps in the examples described with reference to the embodiments disclosed herein may be implemented by electronic hardware, computer software, or a combination thereof. To clearly describe the interchangeability between the hardware and the software, the foregoing has generally described compositions and steps of each example according to functions. Whether the functions are executed in a mode of hardware or software depends on particular applications and design constraint conditions of the technical solutions. A person skilled in the art may use different methods to implement the described functions for each particular application, but it is not to be considered that the implementation goes beyond the scope of this application.

The methods and related apparatuses provided by the embodiments of this application are described with reference to the method flowcharts and/or schematic structural diagrams provided in the embodiments of this application. Specifically, each process of the method flowcharts and/or each block of the schematic structural diagrams, and a combination of processes in the flowcharts and/or blocks in the block diagrams may be implemented by computer program instructions. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the schematic structural diagrams. These computer program instructions may also be stored in a computer readable memory that may guide a computer or another programmable data processing device to work in a specified manner, so that the instructions stored in the computer readable memory generate a product including an instruction apparatus, where the instruction apparatus implements functions specified in one or more processes in the flowcharts and/or one or more blocks in the schematic structural diagrams. The computer program instructions may also be loaded onto a computer or another programmable data processing device, so that a series of operations and steps are performed on the computer or another programmable device, thereby generating computer-implemented processing. Therefore, the instructions executed on the computer or another programmable device provide steps for implementing a specific function in one or more processes in the flowcharts and/or in one or more blocks in the schematic structural diagrams.

The foregoing disclosure is merely some embodiments of this application, and certainly is not intended to limit the protection scope of this application. Therefore, equivalent variations made in accordance with the claims of this application shall fall within the scope of this application.

**Claims**

1. A video data processing method, comprising:

   acquiring a video feature of a target video, the video feature comprising a background feature and a key part region feature;
   acquiring an expected key part quality corresponding to the target video, the expected key part quality being an expected value of an image quality of a key part in a transcoded target video obtained by transcoding the target video;
   determining a background prediction transcoding parameter of the target video based on the background feature, the background prediction transcoding parameter matching with an expected background quality, and the expected background quality being an expected value of an overall image quality of the transcoded target video obtained by transcoding the target video;
   determining, based on the background feature, the key part region feature and the background prediction transcoding parameter, a target transcoding parameter prediction value meeting the expected background quality and matching with the expected key part quality; and
   transcoding the target video based on the target transcoding parameter prediction value.

2. The method according to claim 1, the acquiring a video feature of a target video comprising:

   acquiring the target video, and determining a key part region in the target video; and
   pre-encoding the target video based on a feature encoding parameter and the key part region to obtain the background feature and the key part region feature corresponding to the target video.

3. The method according to claim 2, wherein the background feature comprise one or more of the following: a resolution, a bit rate, a frame rate, a reference frame, a peak signal to noise ratio, PSNR, a structural similarity index, SSIM, and video multi-method assessment fusion, VMAF; and
the key part region feature comprise one or more of the following: a PSNR of the key part region, an SSIM of the key part region, a VMAF of the key part region, a key part frame number ratio of a number of key video frames in which the key part exists to a total number of video frames, a key part area ratio of an area of the key part region in a key video frame in which the key part exists to a total area of the key video frame, and an average bit rate of the key part region.

4. The method according to claim 2, wherein the pre-encoding the target video based on a feature encoding parameter and the key part region to obtain the background feature and the key part region feature corresponding to the target video comprises:

   acquiring the feature encoding parameter, and pre-encoding the target video based on the feature encoding parameter to obtain the background feature of the target video;
   determining, in video frames of the target video, a video frame comprising the key part region as a key video frame; and
   pre-encoding the key video frame and the key part region based on the feature encoding parameter to obtain the key part region feature of the target video.

5. The method according to claim 4, the pre-encoding the key video frame and the key part region based on the feature encoding parameter to obtain the key part region feature of the target video comprising:

   pre-encoding the key video frame based on the feature encoding parameter to obtain a basic attribute of the key video frame;
   acquiring a total number of the video frames of the target video, and a total number of the key video frame, and determining a key part frame number ratio of the total number of the video frames of the target video to the total number of the key video frame;
   acquiring an area of the key part region in the key video frame, and a total area of the key video frame, and determining a key part area ratio of the area of the key part region to the total area of the key video frame; and
   determining the basic attribute of the key video frame, the key part frame number ratio and the key part area ratio as the key part region feature.

6. The method according to claim 2, the acquiring the target video comprising:

   acquiring an initial video;
   inputting the initial video into a segmentation encoder, and determining a scene switch frame of the initial video in the segmentation encoder; and
   segmenting, based on the scene switch frame, the initial video into video segments corresponding to at least two different scenes, and acquiring a target video segment from the video segments as the target video.

7. The method according to claim 1, the determining, based on the background feature, the key part region feature and the background prediction transcoding parameter, a target transcoding parameter prediction value matching with the expected key part quality comprising:

   inputting the background feature, the key part region feature and the background prediction transcoding parameter into a transcoding parameter prediction model, and outputting at least two initial transcoding parameter prediction values through the transcoding parameter prediction model, wherein key part quality standard values respectively corresponding to the at least two initial transcoding parameter prediction values are different from each other; and
   acquiring the expected key part quality, and determining the target transcoding parameter prediction value corresponding to the expected key part quality based on a mapping relationship between the at least two initial transcoding parameter prediction values and the key part quality standard values.

8. The method according to claim 7, wherein the inputting the background feature, the key part region feature and the background prediction transcoding parameter into a transcoding parameter prediction model, and outputting at least two initial transcoding parameter prediction values through the transcoding parameter prediction model comprises:

inputting the background feature, the key part region feature and the background prediction transcoding parameter into a fully connected layer of the transcoding parameter prediction model, to generate a fusion feature in the fully connected layer;

acquiring a key part quality standard value set, the key part quality standard value set comprising at least two key part quality standard values; and

determining, based on the fusion feature, an initial transcoding parameter prediction value corresponding to each of the at least two key part quality standard values.

9. The method according to claim 8, the determining the target transcoding parameter prediction value corresponding to the expected key part quality based on a mapping relationship between the initial transcoding parameter prediction values and the key part quality standard values comprising:

comparing the expected key part quality with the key part quality standard value set;

in a case that the key part quality standard value set comprises a key part quality standard value that is identical to the expected key part quality, determining, based on the mapping relationship between the at least two initial transcoding parameter prediction values and the key part quality standard values, an initial transcoding parameter prediction value corresponding to the key part quality standard value that is identical to the expected key part quality in the at least two initial transcoding parameter prediction values, as the target transcoding parameter prediction value; and

in a case that the key part quality standard value set comprises no key part quality standard value that is identical to the expected key part quality, determining a linear function based on the mapping relationship between the at least two initial transcoding parameter prediction values and the key part quality standard values, and determining the target transcoding parameter prediction value based on the linear function and the expected key part quality.

10. The method according to claim 9, wherein the determining a linear function based on the mapping relationship between the at least two initial transcoding parameter prediction values and the key part quality standard values comprises:

acquiring key part quality standard values greater than the expected key part quality in the key part quality standard value set, and determining a minimum key part quality standard value in the key part quality standard values greater than the expected key part quality;

acquiring key part quality standard values less than the expected key part quality in the key part quality standard value set, and determining a maximum key part quality standard value in the key part quality standard values less than the expected key part quality;

determining, based on the mapping relationship between the at least two initial transcoding parameter prediction values and the key part quality standard values, an initial transcoding parameter prediction value corresponding to the maximum key part quality standard value, and an initial transcoding parameter prediction value corresponding to the minimum key part quality standard value; and

determining the linear function based on the maximum key part quality standard value, the initial transcoding parameter prediction value corresponding to the maximum key part quality standard value, the minimum key part quality standard value, and the initial transcoding parameter prediction value corresponding to the minimum key part quality standard value.

11. The method according to claim 1, further comprising:

acquiring a transcoding parameter prediction model to be trained;

acquiring a sample video feature of a sample video and a key part quality standard value set, the key part quality standard value set comprising at least two key part quality standard values;

inputting the sample video feature into the transcoding parameter prediction model, and outputting a sample initial transcoding parameter prediction value corresponding to each of the at least two key part quality standard values through the transcoding parameter prediction model;

acquiring a key part standard transcoding parameter label corresponding to each of the at least two key part quality standard values from a label mapping table;

determining a transcoding parameter prediction error based on the sample initial transcoding parameter prediction value and the key part standard transcoding parameter label;

completing training of the transcoding parameter prediction model in a case that the transcoding parameter prediction error meets a model convergence condition; and

adjusting a model parameter in the transcoding parameter prediction model in a case that the transcoding parameter prediction error does not meet the model convergence condition.

12. The method according to claim 11, further comprising:

acquiring a plurality of background test transcoding parameters and a plurality of key part test transcoding parameters;

inputting the sample video feature into a label encoder, and encoding, in the label encoder, the sample video feature based on the plurality of background test transcoding parameters and the plurality of key part test transcoding parameters, to obtain a key part test quality corresponding to each of the key part test transcoding parameters under each of the background test transcoding parameters; and

constructing the label mapping table based on a mapping relationship between the key part test quality and each of the key part test transcoding parameters.

13. The method according to claim 12, wherein in a case that key part test quality in the constructed label mapping table comprises the at least two key part quality standard values, a key part test transcoding parameter corresponding to each of the key part quality standard values in the label mapping table is determined, and the key part test transcoding parameter is used as the key part standard transcoding parameter label; and

in a case that the key part test quality in the constructed label mapping table does not comprise the at least two key part quality standard values, a key part transcoding parameter corresponding to each of the key part quality standard values is determined based on the key part test quality and the key part test transcoding parameter in the constructed label mapping table, and the key part transcoding parameter is used as the key part standard transcoding parameter label.

14. A video data processing apparatus, comprising:

a feature acquisition module, configured to acquire a video feature of a target video, the video feature comprising a background feature and a key part region feature;

a quality acquisition module, configured to acquire an expected key part quality corresponding to the target video, the expected key part quality being an expected value of an image quality of a key part in a transcoded target video obtained by transcoding the target video;

a transcoding parameter determining module, configured to determine a background prediction transcoding parameter of the target video based on the background feature, the background prediction transcoding parameter matching with an expected background quality, and the expected background quality being an expected value of an overall image quality of the transcoded target video obtained by transcoding the target video;

a prediction value determining module, configured to determine, based on the background feature, the key part region feature and the background prediction transcoding parameter, a target transcoding parameter prediction value meeting the expected background quality and matching with the expected key part quality; and

a video transcoding module, configured to transcode the target video based on the target transcoding parameter prediction value.

15. A computer device, comprising: a processor and a memory,
the memory storing a computer program, the computer program, when executed by the processor, causing the processor to perform steps of the method according to any one of claims 1 to 13.

16. A computer-readable storage medium, storing a computer program, the computer program comprising program instructions, the program instructions, when executed by a processor, causing the processor to perform the method according to any one of claims 1 to 13.

1000

100a

100n

Service
server

100b

100c

...

FIG. 1

FIG. 2

Acquire video features of a target video, the video features including background features and key part region features ⟋ S101

Acquire an expected quality of a key part corresponding to the target video ⟋ S102

Determine a background prediction transcoding parameter of the target video based on the background features ⟋ S103

Determine a target transcoding parameter prediction value satisfying an expected quality of a background and matched with the expected quality of the key part according to the background features, the key part region features and the background prediction transcoding parameter ⟋ S104

Transcode the target video according to the target transcoding parameter prediction value ⟋ S105

FIG. 3

Key part quality
standard value of 1
Key part quality
standard value of 2
Key part quality
standard value of 3

400

4000

401 402 403 404

400a

400b

...

400n

400m

Initial transcoding parameter
prediction value of 1

Initial transcoding parameter
prediction value of 2

Initial transcoding parameter
prediction value of 3

FIG. 4

Acquire a target video, and determine a key part region in the target video

S201

Pre-encode the target video according to a feature encoding parameter and the key part region to obtain background features and key part region features corresponding to the target video

S202

FIG. 5

Acquire a transcoding parameter prediction model — S301

Acquire sample video features of a sample video and a key part quality standard value set, the key part quality standard value set including at least two key part quality standard values — S302

Input the sample video features into the transcoding parameter prediction model, and output sample initial transcoding parameter prediction values respectively corresponding to the at least two key part quality standard values through the transcoding parameter prediction model — S303

Acquire key part standard transcoding parameter labels respectively corresponding to the at least two key part quality standard values from a label mapping table — S304

Determine a transcoding parameter prediction error according to the sample initial transcoding parameter prediction values and the key part standard transcoding parameter labels — S305

Complete training of the transcoding parameter prediction model in a case that the transcoding parameter prediction error satisfies a model convergence condition — S306

Adjust model parameters in the transcoding parameter prediction model in a case that the transcoding parameter prediction error does not satisfy the model convergence condition — S307

FIG. 6

| Sample video 1 | Background test transcoding parameter=10 | Background image quality |
|---|---|---|
| | Background test transcoding parameter=20 | Background image quality |
| | ... | ... |
| | Background test transcoding parameter=50 | Background image quality |

| Sample video 2 | Background test transcoding parameter=10 | Background image quality |
|---|---|---|
| | Background test transcoding parameter=20 | Background image quality |
| | ... | ... |
| | Background test transcoding parameter=50 | Background image quality |

...

| Sample video n | Background test transcoding parameter=10 | Background image quality |
|---|---|---|
| | Background test transcoding parameter=20 | Background image quality |
| | ... | ... |
| | Background test transcoding parameter=50 | Background image quality |

Sample video 1

Sample video 2

...

Sample video n

Label encoder

FIG. 7a

| | Key part test transcoding parameter=0 | Key part test transcoding parameter=1 | ... | Key part test transcoding parameter=15 |
|---|---|---|---|---|
| Background test transcoding parameter=10 | Key part test quality | Key part test quality | ... | Key part test quality |
| Background test transcoding parameter=11 | Key part test quality | Key part test quality | ... | Key part test quality |
| ... | ... | ... | ... | ... |
| Background test transcoding parameter=50 | Key part test quality | Key part test quality | ... | Key part test quality |

Sample video → Label encoder →

FIG. 7b

Sample video features

800

Transcoding parameter prediction model

Initial transcoding parameter prediction values

Key part standard transcoding parameter labels

Error function calculator

FIG. 8

Start

↓

Input a video clip

Determine a key part region

Encode according to a fixed parameter

↓

Extract video features including: background features and key part region features

Background features

Key part region features

↓

Background prediction transcoding parameter

↓

Transcoding parameter prediction model: determine initial transcoding parameter prediction values

↓

Target transcoding parameter prediction value

↓

Transcode the video according to the target transcoding parameter prediction value

↓

End

FIG. 9

FIG. 10

1

11

111

1111

Initial video
acquisition subunit

1112

Switch frame
determining subunit

1113

Video segmentation
subunit

Target video acquisition unit

112

Key part region
acquisition unit

113

1131

Encoding parameter
acquisition subunit

1132

Key video frame
determining subunit

1133

Key part region feature
determining subunit

Video pre-encoding unit

Feature acquisition module

12

Quality acquisition
module

13

Transcoding parameter
determining module

15

Video transcoding
module

14

141

1411

Fusion feature
generation subunit

1412

Standard value
acquisition subunit

1413

Initial transcoding parameter
prediction value determining subunit

Initial transcoding parameter prediction value output unit

142

1421

Quality matching subunit

1422

Target transcoding parameter
prediction value determining subunit

Target transcoding parameter
prediction value determining unit

Prediction value
determining module

16

Prediction model
acquisition module

17

Sample acquisition
module

18

Sample prediction
value output module

19

Transcoding parameter
label acquisition
module

23

Transcoding parameter
label acquisition
module

24

Test quality
determining module

20

Transcoding parameter
prediction error
determining module

21

Training completion
module

25

Mapping table
construction module

22

Parameter adjustment
module

Video data processing apparatus

FIG. 11

FIG. 12

<table>
<tr><td colspan="2">**INTERNATIONAL SEARCH REPORT**</td><td colspan="2">International application No.<br>**PCT/CN2020/126740**</td></tr>
<tr><td colspan="4">**A.    CLASSIFICATION OF SUBJECT MATTER**<br>H04N 19/154(2014.01)i<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br>    H04N</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br>    CNABS, CNKI, CNTXT, VEN, USTXT, EPTXT, WOTXT: 关键区域, 转码参数, 部分区域, 目标, 码率, 转码, 感兴趣区域, 人脸, 图像, 背景, 对象, 期望, 预测, 质量, 焦点区域, 预期, 整体, 预期质量, 视频, 关键部位, 目标质量, 特征, 感兴趣部位, video, feature, background, key, region, expected, quality, transcoding, parameter, prediction, focus, entire, interesting, code rate</td></tr>
<tr><td colspan="4">**C.    DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">CN 103024445 A (BEIJING BAIDU NETCOM SCIENCE AND TECHNOLOGY CO., LTD.)<br>03 April 2013 (2013-04-03)<br>    entire document</td><td>1-16</td></tr>
<tr><td>A</td><td colspan="2">CN 108600863 A (TENCENT TECHNOLOGY SHENZHEN CO., LTD.) 28 September 2018<br>(2018-09-28)<br>    entire document</td><td>1-16</td></tr>
<tr><td>A</td><td colspan="2">CN 103220550 A (HUAWEI TECHNOLOGIES CO., LTD.) 24 July 2013 (2013-07-24)<br>    entire document</td><td>1-16</td></tr>
<tr><td>PX</td><td colspan="2">CN 111277827 A (TENCENT TECHNOLOGY SHENZHEN CO., LTD.) 12 June 2020<br>(2020-06-12)<br>    claims 1-14, paragraphs 0082-0110</td><td>1-16</td></tr>
<tr><td>A</td><td colspan="2">CN 109729384 A (GUANGZHOU CITY PAGODA INFORMATION TECHNOLOGY CO.,<br>LTD.) 07 May 2019 (2019-05-07)<br>    entire document</td><td>1-16</td></tr>
<tr><td>A</td><td colspan="2">CN 101583036 A (ZHEJIANG UNIVERSITY) 18 November 2009 (2009-11-18)<br>    entire document</td><td>1-16</td></tr>
<tr><td colspan="4">☑ Further documents are listed in the continuation of Box C.        ☑ See patent family annex.</td></tr>
<tr><td colspan="2">*    Special categories of cited documents:<br>"A"  document defining the general state of the art which is not considered<br>      to be of particular relevance<br>"E"  earlier application or patent but published on or after the international<br>      filing date<br>"L"  document which may throw doubts on priority claim(s) or which is<br>      cited to establish the publication date of another citation or other<br>      special reason (as specified)<br>"O"  document referring to an oral disclosure, use, exhibition or other<br>      means<br>"P"  document published prior to the international filing date but later than<br>      the priority date claimed</td><td colspan="2">"T"  later document published after the international filing date or priority<br>      date and not in conflict with the application but cited to understand the<br>      principle or theory underlying the invention<br>"X"  document of particular relevance; the claimed invention cannot be<br>      considered novel or cannot be considered to involve an inventive step<br>      when the document is taken alone<br>"Y"  document of particular relevance; the claimed invention cannot be<br>      considered to involve an inventive step when the document is<br>      combined with one or more other such documents, such combination<br>      being obvious to a person skilled in the art<br>"&"  document member of the same patent family</td></tr>
<tr><td colspan="2">Date of the actual completion of the international search<br><br>**20 January 2021**</td><td colspan="2">Date of mailing of the international search report<br><br>**28 January 2021**</td></tr>
<tr><td colspan="2">Name and mailing address of the ISA/CN<br><br>**China National Intellectual Property Administration (ISA/<br>CN)<br>No. 6, Xitucheng Road, Jimenqiao, Haidian District, Beijing<br>100088<br>China**</td><td colspan="2">Authorized officer</td></tr>
<tr><td colspan="2">Facsimile No. **(86-10)62019451**</td><td colspan="2">Telephone No.</td></tr>
</table>

Form PCT/ISA/210 (second sheet) (January 2015)

**INTERNATIONAL SEARCH REPORT**

| International application No. |
| --- |
| **PCT/CN2020/126740** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 105306960 A (BEIHANG UNIVERSITY) 03 February 2016 (2016-02-03)<br>entire document | 1-16 |
| A | US 2014185667 A1 (MCPHILLEN JARED et al.) 03 July 2014 (2014-07-03)<br>entire document | 1-16 |
| A | KR 101978922 B1 (KWANGWOON UNIVERSITY INDUSTRY-ACADEMIC<br>COLLABORATION FOUNDATION) 15 May 2019 (2019-05-15)<br>entire document | 1-16 |
| A | GB 2353655 A (SONY UK LTD.) 28 February 2001 (2001-02-28)<br>entire document | 1-16 |

Form PCT/ISA/210 (second sheet) (January 2015)

INTERNATIONAL SEARCH REPORT
Information on patent family members

International application No.

**PCT/CN2020/126740**

| Patent document cited in search report | | | Publication date (day/month/year) | Patent family member(s) | | | Publication date (day/month/year) |
|---|---|---|---|---|---|---|---|
| CN | 103024445 | A | 03 April 2013 | CN | 103024445 | B | 29 June 2016 |
| CN | 108600863 | A | 28 September 2018 | WO | 2019184822 | A1 | 03 October 2019 |
| CN | 103220550 | A | 24 July 2013 | US | 2014348246 | A1 | 27 November 2014 |
| | | | | CN | 103220550 | B | 07 December 2016 |
| | | | | EP | 2800388 | A1 | 05 November 2014 |
| | | | | EP | 2800388 | A4 | 19 November 2014 |
| | | | | WO | 2013107157 | A1 | 25 July 2013 |
| | | | | US | 9872021 | B2 | 16 January 2018 |
| CN | 111277827 | A | 12 June 2020 | None | | | |
| CN | 109729384 | A | 07 May 2019 | None | | | |
| CN | 101583036 | A | 18 November 2009 | CN | 101583036 | B | 17 November 2010 |
| CN | 105306960 | A | 03 February 2016 | CN | 105306960 | B | 04 May 2018 |
| US | 2014185667 | A1 | 03 July 2014 | IL | 229927 | D0 | 31 March 2014 |
| | | | | IL | 229927 | A | 31 January 2017 |
| | | | | US | 9924164 | B2 | 20 March 2018 |
| KR | 101978922 | B1 | 15 May 2019 | None | | | |
| GB | 2353655 | A | 28 February 2001 | US | 6529555 | B1 | 04 March 2003 |
| | | | | DE | 60032841 | D1 | 22 February 2007 |
| | | | | EP | 1079630 | B1 | 10 January 2007 |
| | | | | JP | 2001103477 | A | 13 April 2001 |
| | | | | GB | 9920276 | D0 | 27 October 1999 |
| | | | | EP | 1079630 | A1 | 28 February 2001 |
| | | | | DE | 60032841 | T2 | 25 October 2007 |
| | | | | GB | 2353655 | B | 23 July 2003 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010112208